(19) Europäisches Patentamt
European Patent Office
Office européen des brevets

(11) EP 3 783 041 B1

(12) EUROPEAN PATENT SPECIFICATION

(45) Date of publication and mention of the grant of the patent:
**06.09.2023 Bulletin 2023/36**

(21) Application number: **20188916.9**

(22) Date of filing: **31.07.2020**

(51) International Patent Classification (IPC):
***C08G 18/08*** *(2006.01)* ***C08G 18/09*** *(2006.01)*
***C08G 18/12*** *(2006.01)* ***C08G 18/72*** *(2006.01)*
***C08G 18/73*** *(2006.01)* ***C08G 18/75*** *(2006.01)*

(52) Cooperative Patent Classification (CPC):
**C08G 18/0819; C08G 18/0828; C08G 18/092; C08G 18/12; C08G 18/283; C08G 18/722; C08G 18/73; C08G 18/755; C08G 18/792**

(54) **BLOCKED POLYISOCYANATE COMPOSITION, HYDROPHILIC POLYISOCYANATE COMPOSITION, RESIN COMPOSITION, RESIN FILM AND LAMINATED BODY**

BLOCKIERTE POLYISOCYANATZUSAMMENSETZUNG, HYDROPHILE POLYISOCYANATZUSAMMENSETZUNG, HARZZUSAMMENSETZUNG, HARZFILM UND LAMINIERTER KÖRPER

COMPOSITION DE POLYISOCYANATE BLOQUÉE, COMPOSITION DE POLYISOCYANATE HYDROPHILE, COMPOSITION DE RÉSINE, FILM DE RÉSINE ET CORPS STRATIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2019 JP 2019142741**
**02.12.2019 JP 2019218158**
**26.12.2019 JP 2019236784**
**30.07.2020 JP 2020129537**

(43) Date of publication of application:
**24.02.2021 Bulletin 2021/08**

(60) Divisional application:
**21207793.7 / 3 995 521**

(73) Proprietor: **Asahi Kasei Kabushiki Kaisha**
**Tokyo 1000006 (JP)**

(72) Inventors:
- **HIGASHI, Masatsugu**
**Tokyo, 100-0006 (JP)**
- **TANAKA, Eiko**
**Tokyo, 100-0006 (JP)**
- **YOSHINUMA, Tomoharu**
**Tokyo, 100-0006 (JP)**
- **AZUMA, Koichiro**
**Tokyo, 100-0006 (JP)**

(74) Representative: **Strehl Schübel-Hopf & Partner**
**Maximilianstrasse 54**
**80538 München (DE)**

(56) References cited:
**WO-A1-2018/070532** **US-A1- 2019 010 272**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a blocked polyisocyanate composition, a hydrophilic polyisocyanate composition, a resin composition, a resin film and a laminated body.

BACKGROUND OF THE INVENTION

Polyurethane resin coating materials conventionally have excellent abrasion resistance, chemical resistance and pollution resistance. Polyurethane resin coating materials using polyisocyanates derived from aliphatic diisocyanates or alicyclic diisocyanates have excellent weather resistance, particularly, and the demand thereof tends to increase. However, the polyurethane resin coating materials are generally two-part type, and therefore the use thereof is extremely inconvenient. That is, a conventional polyurethane resin coating material is composed of two components of a polyol and a polyisocyanate, and the polyol and the polyisocyanate are required to be stored separately, and then mixed when coating is conducted. Once the polyol and the polyisocyanate are mixed, the resultant coating material gels in a short time, and cannot be used. Thus, the polyurethane resin coating material has such a problem, and therefore it is extremely difficult to use the polyurethane resin coating material for automatic painting in the field of line painting, such as automotive painting or weak electrical painting. In addition, since isocyanates react readily with water, the isocyanates cannot be used in water-based coating materials such as electrodeposition coating materials. Furthermore, in the case where an isocyanate-containing coating material is used, it is necessary to thoroughly clean the painting machine and the painting tank at the end of the work. Therefore, the work efficiency is significantly reduced.

In order to ameliorate the above-mentioned problems, it has been proposed to use blocked polyisocyanates in which all active isocyanate groups are blocked with blocking agents. The blocked polyisocyanate does not react with a polyol at ordinary temperature. However, when heating is conducted, the blocking agent is dissociated, the active isocyanate group is regenerated to react with the polyol, which results in a cross-link reaction, and thus the above-mentioned problems are ameliorated. Accordingly, numerous blocking agents, such as phenol or methyl ethyl ketoxyme, have been studied.

However, when a blocked polyisocyanate using such a blocking agent is used, baking at 140°C or more is required. The need to bake at such a high temperature is not only energetically disadvantageous, but also requires the heat resistance of the substrate, which is a factor that limits its application.

In contrast, blocked polyisocyanates using active methylene-based compounds such as acetoacetate ester or malonate diester have been studied as low temperature baking type blocked polyisocyanates. For example, Patent Documents 1 and 2 disclose blocked polyisocyanate compositions that cure at 90°C.

DOCUMENTS OF RELATED ART

Patent Documents

Patent Document 1: Japanese Unexamined Patent Application Publication No. 2002-322238
Patent Document 2: Japanese Unexamined Patent Application Publication No. 2006-335954

WO 2018/070532 A2 discloses an isocyanate composition which, in an example, comprises 2-ethylhexylphosphate as an anionic dispersion agent.

US 2019/010272 A1 discloses a blocked polyisocyanate composition comprising, in an example, sodium salt of N-(2-aminoethyl)-2-aminoethanesulfonic acid as an anionic dispersion agent.

SUMMARY OF THE INVENTION

PROBLEMS TO BE SOLVED BY THE INVENTION

However, in recent years, there has been a strong need for global environmental protection and adaptation to plastics having low heat resistance, and there is a need for blocked polyisocyanate compositions that cure at temperatures below 90°C. Under such circumstances, ones that exhibit good dispersibility in water-based polyols (water-dispersed polyols) having hydroxyl groups when mixed therewith, neither gel nor excessively increase the viscosity thereof when stored, and are curable at 80°C or less, have not yet been known.

The present invention provides, in light of the above-mentioned circumstances, a blocked polyisocyanate composition which has good storage stability when made into a resin composition and good curability at a low temperature of approximately 80°C when made into a resin film, as well as a resin composition, a resin film, and a laminated body, using the blocked polyisocyanate composition.
In addition, a hydrophilic polyisocyanate composition having good dispersibility in water and excellent hardness when made into a resin film, as well as a blocked polyisocyanate composition, a resin composition, and a resin film, using the hydrophilic polyisocyanate composition, are provided.

MEANS TO SOLVE THE PROBLEMS

The present invention involves the embodiments enumerated in the claims.

EFFECTS OF THE INVENTION

The blocked polyisocyanate composition according to the invention has good storage stability when made into a resin composition and good curability at a low temperature of about 80°C when made into a resin film. The resin composition according to the invention has good storage stability. The resin film according to the invention has good curability at a low temperature of about 80°C. The laminated body according to the invention contains two or more layers of the resin film, constitutions of which are different from each other, and the resin film has good curability at low temperatures of approximately 80°C.

EMBODIMENTS FOR CARRYING OUT THE INVENTION

Embodiments for carrying out the present invention (hereinafter, referred to as "embodiment" simply) will be explained below in detail. The present invention is not intended to be limited to the following embodiments.
In the present specification, the term "polyol" refers to a compound having at least two hydroxy groups (-OH).
In the present specification, the term "polyisocyanate" refers to a reactant formed by binding plural monomer compounds having at least one isocyanate group (-NCO).

«Blocked polyisocyanate composition»

A blocked polyisocyanate composition of the first embodiment according to the present invention contains: a blocked polyisocyanate derived from a polyisocyanate and at least one blocking agent; and an anionic dispersion agent.
The blocking agent contains: a compound (A) of the following general formula (I) (hereinafter, may be referred to as "compound (I)"); or a compound (B) having a heterocyclic ring containing at least one nitrogen atom.

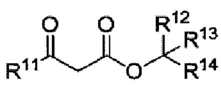

(I)

In the general formula (I),
$R^{11}$ represents a hydroxy group; an alkyl group which may contain at least one substituent selected from the group consisting of a hydroxy group and an amino group; an amino group which may contain at least one substituent selected from the group consisting of a hydroxy group and alkyl groups; an aryl group which may contain at least one substituent selected from the group consisting of a hydroxy group and an amino group; or an alkoxy group which may contain at least one substituent selected from the group consisting of a hydroxy group and an amino group. The amino group may form a ring by binding two of the substituents together.
$R^{12}$, $R^{13}$, and $R^{14}$ each independently represents a hydrogen atom; an alkyl group which may contain at least one substituent selected from the group consisting of a hydroxy group and an amino group; or an aryl group which may contain at least one substituent selected from the group consisting of a hydroxy group and an amino group. The amino group may form a ring by binding two of the substituents together. At least two of $R^{12}$, $R^{13}$, and $R^{14}$ are not hydrogen atoms.)
The surface tension of the anionic dispersion agent is 32 mN/m to 51 mN/m, preferably 34 mN/m to 50 mN/m, more preferably 36 mN/m to 48 mN/m, and even more preferably 37 mN/m to 47 mN/m, the surface tension being determined by Wilhelmy method using an aqueous solution consisting of 0.1% by mass, relative to the total mass of the aqueous solution, of the anionic dispersion agent and water at 25°C. In the case where the surface tension is within the above-mentioned range, the storage stability when made into a resin composition tends to be maintained favorably.
Although a conventional blocked polyisocyanate composition using a malonic ester having a secondary alkyl group or a tertiary alkyl group (such as diisopropyl malonate or di-tert-butyl malonate) as a blocking agent has excellent

curability at a low temperature of approximately 80°C, the conventional blocked polyisocyanate composition has problems in terms that the reactivity with a hydroxyl group of a polyvalent hydroxy compound such as a polyol is high, and the viscosity thereof significantly increases and gelation readily occurs when stored as a resin composition containing a main agent and a curing agent. In particular, the above-mentioned problems become significant when a blocked polyisocyanate composition using a malonic ester having a tertiary alkyl group (such as di-tert-butyl malonate) as a blocking agent and a water-based polyol are mixed, therefore the improvement thereof has been desired.

In contrast, the blocked polyisocyanate composition according to the present embodiment makes it possible to improve the above-mentioned problems by including the anionic dispersion agent having a surface tension within the above-mentioned range, effectively inhibit viscosity increase and gelation when stored as a mixture of the blocked polyisocyanate composition and a polyvalent hydroxy compound, and exert favorable storage stability.

The surface tension may be determined by the following method, for example. An anionic dispersion agent is diluted with water to prepare an aqueous solution consisting of: 0.1% by mass of the anionic dispersion agent, relative to the total mass of the aqueous solution; and water. Then, the aqueous solution was used to measure the surface tension at 25°C by Wilhelmy method (which may be referred to as plate method or vertical plate method). Specifically, when a plate that is a measuring unit makes contact with the surface of the aqueous solution, the aqueous solution wets the plate upwards. At the time, the surface tension acts along the perimeter of the plate, and the force that pulls the plate into the aqueous solution generates. The pulling force F (force that acts on the plate, measuring force) is read, and the surface tension r is determined by the following formula. In the formula, L represents the perimeter (m) of the plate, and $\theta$ represents the contact angle of the plate and the aqueous solution.

$$r = F / (L \times \cos\theta)$$

The surface tension may be measured using a commercially available measurement device, such as static surface tension measurement system (manufactured by DKSH Japan, under the model number of TD 1C or TD 3).

Hereinafter, each component included in the blocked polyisocyanate composition according to the present embodiment will be described in detail.

<Blocked polyisocyanate>

A blocked polyisocyanate is a reactant derived from a polyisocyanate and a blocking agent. That is, the blocked polyisocyanate is formed by blocking at least a part of isocyanate groups in the polyisocyanate with the blocking agent.

The blocked polyisocyanate may have at least one functional group selected from the group consisting of an allophanate group, a urethodione group, an iminooxadiazine dione group, an isocyanurate group, a urethane group, and a biuret group. Among these, it is preferable to include an isocyanurate group in terms that the weather resistance becomes excellent.

The blocked polyisocyanate preferably contains a blocked isocyanurate trimer. The term "isocyanurate trimer" refers to a polyisocyanate derived from three isocyanate monomer molecules and having an isocyanurate group. The term "blocked isocyanurate trimer" means that at least a part (preferably all) of isocyanate groups in the isocyanurate trimer is blocked with a blocking agent. The presence of the blocked isocyanurate trimer tends to improve the heat resistance of a resultant resin film.

[Polyisocyanate]

The polyisocyanate used to prepare the blocked polyisocyanates is a reactant obtained by reacting a plurality of monomeric compounds having at least one isocyanate (-NCO) group (hereinafter may be referred to as "isocyanate monomer").

The isocyanate monomer preferably has a carbon number of 4 to 30. Examples of the isocyanate monomer include the following. These isocyanate monomers may be used alone or in a combination of at least two thereof.

(1) Aromatic diisocyanates such as diphenylmethane-4,4'-diisocyanate (MDI), 1,5-naphthalene diisocyanate, trilene diisocyanate (TDI), xylylene diisocyanate, and m-tetramethylxylylene diisocyanate (TMXDI).

(2) Aliphatic diisocyanates such as 1,4-tetramethylene diisocyanate, 1,6-hexamethylene diisocyanate (hereinafter, may be referred to as "HDI"), 2,2,4-trimethyl-1,6-diisocyanatohexane, 2,4,4-trimethyl-1,6-hexamethylene diisocyanate, 2-methylpentane-1,5-diisocyanate (MPDI), and lysine diisocyanate (hereinafter, may be referred to as "LDI").

(3) Alicyclic diisocyanates such as isophorone diisocyanate (hereinafter, may be referred to as "IPDI"), 1,3-bis(diisocyanatemethyl) cyclohexane, 4,4'-dicyclohexylmethane diisocyanate, diisocyanate norbornane, and di(isocyanatemethyl)norbornane.

(4) Triisocyanates such as 4-isocyanate methyl-1,8-octamethylene diisocyanate (hereinafter, may be referred to as "NTI"), 1,3,6-hexamethylene triisocyanate (hereinafter, may be referred to as "HTI"), bis(2-isocyanatoethyl) 2-isocyanatoglutarate (hereinafter, may be referred to as "GTI"), and lysine triisocyanate (hereinafter, may be referred to as "LTI").

Among these, at least one diisocyanate selected from the group consisting of the aliphatic diisocyanates and alicyclic diisocyanates is preferably used as an isocyanate monomer in terms that the weather resistance is excellent. Furthermore, HDI or IPDI is more preferably used as the isocyanate monomer due to the easy industrial availability thereof. In addition, HDI is more preferably used as the isocyanate monomer from the viewpoint of decrease in the viscosity of the blocked polyisocyanate component.

(Preparation method of polyisocyanate)

The preparation method of the polyisocyanate will be explained below in detail.
The polyisocyanate may be prepared, for example, by conducting simultaneously allophanate-forming reaction for forming an allophanate group, urethodione-forming reaction for forming a urethodione group, iminooxadiazine dione-forming reaction for forming an iminooxadiazine dione group, isocyanurate-forming reaction for forming an isocyanurate group, urethane-forming reaction for forming a urethane group, and biuret-forming reaction for forming a biuret group, in the presence of an excess amount of isocyanate monomer, and then removing unreacted isocyanate monomers after the end of the reaction. That is, the polyisocyanate obtained by the above-mentioned reactions is formed by binding a plurality of the isocyanate monomers, and is a reactant having at least one selected from the group consisting of an allophanate group, a urethodione group, an iminooxadiazine dione group, an isocyanurate group, a urethane group and a biuret group.
Alternatively, the above-mentioned reactions may be conducted separately, and the resultant polyisocyanates may be mixed at particular ratios.
It is preferable to conduct the above-mentioned reactions simultaneously to obtain a polyisocyanate from the viewpoint of the ease of manufacture, and it is preferable to conduct the above-mentioned reactions separately and then mix the resultants in terms that the molar ratio of each functional group can be adjusted freely.
Examples of a catalyst that is used to obtain a polyisocyanate containing an isocyanurate group from isocyanate monomers include generally available isocyanurate-forming reaction catalysts.
Although there is no particular limitation on the isocyanurate-forming reaction catalyst, basic catalysts are preferable in general. Specific examples of the isocyanurate-forming reaction catalyst are shown below.

1) Hydroxides of tetraalkylammonium such as tetramethylammonium, tetraethylammonium, and tetrabutylammonium, and organic weak acid salts of tetraalkylammonium such as acetic acid salts, propionic acid salts, octylic acid salts, capric acid salts, myristic acid salts, and benzoic acid salts.
2) Hydroxides of aryltrialkylammonium, such as benzyltrimethylammonium and trimethylphenylammonium, and organic weak acid salts of aryltrialkylammonium, such as acetic acid salts, propionic acid salts, octylic acid salts, capric acid salts, myristic acid salts, and benzoic acid salts.
3) Hydroxides of hydroxyalkylammonium, such as trimethylhydroxyethylammonium, trimethylhydroxypropylammonium, triethylhydroxyethylammonium, and triethylhydroxypropylammonium, and organic weak acid salts of hydroxyalkylammonium, such as acetic acid salts, propionic acid salts, octylic acid salts, capric acid salts, myristic acid salts, and benzoic acid salts.
4) Metallic salts, such as tin, zinc, and lead, of alkylcarboxylic acids such as acetic acid, propionic acid, caproic acid, octylic acid, capric acid, and myristic acid.
5) Metal alkolates such as alkolates of sodium and potassium.
6) Aminosilyl group-containing compounds such as hexamethylene disilazane.
7) Mannich bases.
8) Mixtures of tertiary amines and epoxy compounds.
9) Phosphoric compounds such as tributylphosphine.

Among these, a hydroxide of quaternary ammonium or an organic weak acid salt of quaternary ammonium is preferably used, and a hydroxide of tetraalkylammonium, an organic weak acid salt of tetraalkylammonium, a hydroxide of aryltrialkylammonium, or an organic weak acid salt of aryltrialkylammonium is more preferably used, as the isocyanurate-forming reaction catalyst, from the viewpoint of difficulty in generation of unrequired by-products.
The upper limit of the amount of the above-mentioned isocyanurate-forming reaction catalyst to be used, relative to the mass of charged isocyanate monomers, is preferably 1000 ppm by mass, more preferably 500 ppm by mass, and even more preferably 100 ppm by mass.

In contrast, the lower limit of the amount of the above-mentioned isocyanurate-forming reaction catalyst to be used, relative to the mass of charged isocyanate monomers, is not particularly limited, and the lower limit may be 10 ppm by mass, for example.

The isocyanurate-forming reaction temperature is preferably 50°C to 120°C, and more preferably 55°C to 90°C. In the case where the isocyanurate-forming reaction temperature is the above-mentioned upper limit or lower, coloration of the polyisocyanate tends to be effectively suppressed.

The isocyanurate-forming reaction is terminated by addition of an acidic compound (such as phosphoric acid or acidic phosphoric acid ester) when a desired conversion ratio (the ratio of the mass of the polyisocyanate formed in the isocyanurate-forming reaction, relative to the mass of the charged isocyanate monomers) is reached.

It is required to terminate the reaction at an initial stage so as to obtain a polyisocyanate. However, the initial rate of isocyanurate-forming reaction is so rapid that it is difficult to terminate the reaction at an early stage, and therefore the reaction conditions, especially the amount of catalyst added and the method of addition, need to be carefully selected. For example, a method of partitioning and adding a catalyst for a constant time period is recommended as a preferred method.

Therefore, the conversion ratio of the isocyanurate-forming reaction to obtain the polyisocyanate is preferably 10% to 60%, more preferably 15% to 55%, and even more preferably 20% to 50%.

In the case where the conversion ratio of the isocyanurate-forming reaction is the above-mentioned upper limit or less, the viscosity of the blocked polyisocyanate component can be further decreased. In the case where the conversion ratio of the isocyanurate-forming reaction is the above-mentioned lower limit or more, the procedure for terminating the reaction can be conducted further easily.

A monovalent to hexavalent alcohol may be used in addition to the above-mentioned isocyanate monomers to obtain the polyisocyanate containing an isocyanurate group.

Examples of the available monovalent to hexavalent alcohols include non-polymerizable alcohols, and polymerizable alcohols. The term "non-polymerizable alcohol" refers to an alcohol free from any polymerizable groups. In contrast, the term "polymerizable alcohol" refers to an alcohol obtained by polymerizing monomers having a polymerizable group and a hydroxyl group.

Examples of the non-polymerizable alcohol include polyvalent alcohols such as monoalcohols, diols, triols, and tetraols.

Examples of the monoalcohols include methanol, ethanol, n-propanol, isopropanol, n-butanol, isobutanol, sec-butanol, n-pentanol, n-hexanol, n-octanol, n-nonanol, 2-ethylbutanol, 2,2-dimethylhexanol, 2-ethylhexanol, cyclohexanol, methylcyclohexanol, and ethylcyclohexanol.

Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethylhexanediol, 1,2-octanediol, 1,2-decanediol, 2,2,4-trimethyl pentanediol, 2-butyl-2-ethyl-1,3-propanediol, and 2,2-diethyl-1,3-propanediol.

Examples of the triols include glycerine, and trimethylolpropane.

Examples of the tetraols include pentaerythritol.

Although there is no particular limitation on the polymerizable alcohols, examples thereof include polyester polyols, polyether polyols, acrylic polyols, and polyolefin polyols.

Although there is no particular limitation on the polyester polyol, examples thereof include reactants obtained by condensation reaction of at least one dibasic acid and at least one polyvalent alcohol.

Although there is no particular limitation on the dibasic acid, examples thereof include succinic acid, adipic acid, sebacic acid, dimeric acid, maleic anhydride, phthalic anhydride, isophthalic acid, and terephthalic acid.

Although there is no particular limitation on the polyvalent alcohol, examples thereof include ethylene glycol, propylene glycol, diethylene glycol, neopentyl glycol, trimethylolpropane, and glycerine.

Additional examples of the polyester polyols include polycaprolactones obtained by subjecting ε-caprolactone to ring-opening polymerization using the above-mentioned polyvalent alcohol.

Although there is no particular limitation on the polyether polyols, examples thereof include: polyether polyols obtained by adding at least one alkylene oxide to at least one polyvalent alcohol using an alkali metal hydroxide or a strong basic catalyst; polyether polyols obtained by reacting an alkylene oxide with a polyamine compound; and polymer polyols obtained by polymerizing acrylamides using the above-mentioned polyethers as mediums.

Examples of the alkali metal include lithium, sodium, and potassium.

Examples of the strong basic catalyst include alkolates, and alkylamines.

Examples of the polyvalent alcohol include those mentioned above for the polyester polyols.

Examples of the alkylene oxide include ethylene oxide, propylene oxide, butylene oxide, cyclohexene oxide, and styrene oxide.

Examples of the polyamine compound include ethylene diamine.

Although there is no particular limitation on the acrylic polyols, examples thereof include ones obtained by copolymerizing at least one ethylenically unsaturated binding-containing monomer having a hydroxyl group with at least one ethylenically unsaturated binding-containing monomer copolymerizable therewith and different therefrom.

Although there is no particular limitation on the ethylenically unsaturated binding-containing monomer having a hydroxyl group, examples thereof include hydroxyethyl acrylate, hydroxypropyl acrylate, hydroxybutyl acrylate, hydroxyethyl methacrylate, hydroxypropyl methacrylate, and hydroxybutyl methacrylate.

Although there is no particular limitation on the ethylenically unsaturated binding-containing monomer copolymerizable with the ethylenically unsaturated binding-containing monomer having a hydroxyl group and different therefrom, examples thereof include acrylic acid esters, methacrylic acid esters, unsaturated carboxylic acids, unsaturated amides, vinyl-based monomers, and vinyl-based monomers having a hydrolyzable silyl group.

Examples of the acrylic acid esters include methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate.

Examples of the methacrylic acid esters include methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.

Examples of the unsaturated carboxylic acids include acrylic acid, methacrylic acid, maleic acid, and itaconic acid.

Examples of the unsaturated amides include acrylamide, methacrylamide, N,N-methylenebisacrylamide, diacetoneacrylamide, diacetonemethacrylamide, maleic acid amide, and maleimide.

Examples of the vinyl-based monomers include glycidyl methacrylate, styrene, vinyltoluene, vinyl acetate, acrylonitrile, and dibutyl fumarate.

Examples of the vinyl-based monomers having a hydrolyzable silyl group include vinyl trimethoxysilane, vinylmethyl dimethoxysilane, and $\gamma$-(meth)acryloxypropyl trimethoxysilane.

Examples of the polyolefin polyols include polybutadienes having hydroxylated terminal and hydrogen additives thereof.

The allophanate-forming reaction, the urethodione-forming reaction, the iminooxadiazine dione-forming reaction, the isocyanurate-forming reaction, the urethane-forming reaction, and the biuret-forming reaction may be conducted sequentially, or some of the reactions may be conducted in parallel.

After the end of the reaction, the reaction liquid may be subjected to thin-film distillation or extraction to remove unreacted isocyanate monomers therefrom, and thus a polyisocyanate is obtained.

An antioxidant or an ultraviolet absorber may also be added to the resultant polyisocyanate, for example, so as to inhibit coloration during storage.

Examples of the antioxidant include hindered phenols such as 2,6-di-tert-butyl-p-cresol. Examples of the ultraviolet absorber include benzotriazole and benzophenone. The antioxidant and the ultraviolet absorber may be used alone or a combination of at least two thereof. The addition amount thereof, relative to the mass of the polyisocyanate, is preferably 10 ppm by mass to 500 ppm by mass.

(Average number of isocyanate functional groups in polyisocyanate)

The average number of isocyanate functional groups in the polyisocyanate is preferably at least 2.0 in terms that the curability at a low temperature when made into a resin film is improved, and more preferably at least 3.0, more preferably 4.6 to 20, and even more preferably 5 to 10, in terms that both the curability at a low temperature and the compatibility with a polyvalent alcohol compound are realized when made into a resin film.

The average number of isocyanate functional groups in the polyisocyanate may be measured by the method described in examples mentioned below.

[Blocking agent]

A blocking agent used to prepare the blocked polyisocyanate contains a compound (A) of the following general formula (I) (compound (I)). The blocking agent may contain the compound (I) alone or a combination of at least two thereof.

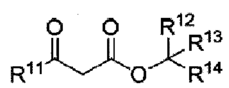

(I)

(Compound (I))

(1) $R^{11}$

In the general formula (I), $R^{11}$ represents: a hydroxy group; an alkyl group which may contain at least one substituent selected from the group consisting of a hydroxy group and an amino group; an amino group which may contain at least one substituent selected from the group consisting of a hydroxy group and alkyl groups; an aryl group which may contain at least one substituent selected from the group consisting of a hydroxy group and an amino group; or an alkoxy group which may contain at least one substituent selected from the group consisting of a hydroxy group and an amino group. The amino group may form a ring by binding two of the substituents together.

In the case where $R^{11}$ is an unsubstituted alkyl group, the carbon number of the alkyl group is preferably 1 to 30, more preferably 1 to 8, even more preferably 1 to 6, and particularly preferably 1 to 4. Specific examples of the unsubstituted alkyl group include a methyl group, an ethyl group, a propyl group, an isopropyl group, a n-butyl group, a tert-butyl group, a sec-butyl group, an isobutyl group, a n-pentyl group, an isopentyl group, a neopentyl group, a tert-pentyl group, a 1-methylbutyl group, a n-hexyl group, a 2-methylpentyl group, a 3-methylpentyl group, a 2,2-dimethylbutyl group, a 2,3-dimethylbutyl group, a n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, a n-octyl group, an isooctyl group, a 2-ethylhexyl group, a nonyl group, and a decyl group.

In the case where $R^{11}$ is a substituted alkyl group, a substituent thereof is a hydroxy group or an amino group.

Examples of the alkyl group having a hydroxyl group as a substituent include a hydroxymethyl group, a hydroxyethyl group, and a hydroxypropyl group.

Examples of the alkyl group having an amino group as a substituent include an aminomethyl group, an aminoethyl group, an aminopropyl group, and an aminobutyl group.

Examples of the alkyl group having both a hydroxy group and an amino group as substituents include a hydroxyaminomethyl group, a hydroxyaminoethyl group, and a hydroxyaminopropyl group.

In the case where $R^{11}$ is a substituted amino group, a substituent thereof is a hydroxy group or an alkyl group.

Examples of the amino group having a hydroxyl group as a substituent include a hydroxyamino group (-NH-OH).

Examples of the amino group having an alkyl group as a substituent include a methylamino group, an ethylamino group, a n-butylamino group, a dimethylamino group, a diethylamino group, a dipropylamino group, a diisopropylamino group, a din-butylamino group, a di-tert-butylamino group, a di-sec-butylamino group, a diisobutylamino group, and a 2,6-dimethylpiperidyl group.

Examples of the amino group having both a hydroxy group and an alkyl group as substituents include a hydroxymethyleneamino group, a hydroxyethyleneamino group, a hydroxypropyleneamino group, and a hydroxybutyleneamino group.

Examples of the amino group, two substituents of which are bonded together to form a ring, include cyclic secondary amino groups, such as an ethyleneimino group, an azacyclobutyl group, a pyrrolidyl group, a piperidyl group, a 2,6-dimethylpiperidyl group, and a hexamethyleneimino group.

In the case where $R^{11}$ is an unsubstituted aryl group, the carbon number of the aryl group is preferably 5 to 30, more preferably 6 to 20, and even more preferably 6 to 14. Specific examples of the aryl group include monocyclic aromatic hydrocarbon groups, bicyclic aromatic hydrocarbon groups, tricyclic aromatic hydrocarbon groups, tetracyclic aromatic hydrocarbon groups, pentacyclic aromatic hydrocarbon groups, hexacyclic aromatic hydrocarbon groups, and heptacyclic aromatic hydrocarbon groups.

Examples of the monocyclic aromatic hydrocarbon group include a phenyl group, a benzyl group, a tolyl group, and an o-xylyl group.

Examples of the bicyclic aromatic hydrocarbon group include an indanyl group, an indenyl group, a pentalenyl group, an azulenyl group, a naphthyl group, and a tetrahydronaphthyl group.

Examples of the tricyclic aromatic hydrocarbon group include an anthracenyl group, a fluorenyl group, a phenalenyl group, and a phenanthrenyl group.

Examples of the tetracyclic aromatic hydrocarbon group include a pyrenyl group, a naphthacenyl group, and a chrysenyl group.

Examples of the pentacyclic aromatic hydrocarbon group include a perylenyl group, a pycenyl group, and a pentacenyl group.

Examples of the hexacyclic aromatic hydrocarbon group include a naphtopyrenyl group.

Examples of the heptacyclic aromatic hydrocarbon group include a coronenyl group.

In the case where $R^{11}$ is a substituted aryl group, a substituent thereof is a hydroxy group or an amino group.

Examples of an aryl group having a hydroxyl group as a substituent include a phenol group.

Examples of an aryl group having an amino group as a substituent include an aniline group.

Examples of an aryl group having both a hydroxy group and an amino group as substituents include an aminophenol group (a hydroxyaniline group).

In the case where $R^{11}$ is an unsubstituted alkoxy group, the carbon number of the alkoxy group is preferably 1 to 30, more preferably 1 to 8, even more preferably 1 to 6, and particularly preferably 1 to 4. Specific examples of the alkoxy group include a methoxy group, an ethoxy group, a propoxy group, an isopropoxy group, a n-butoxy group, a tert-butoxy group, a sec-butoxy group, an isobutoxy group, a n-pentoxy group, an isopentoxy group, a neopentoxy group, a tert-pentoxy group, a 1-methylbutoxy group, a n-hexoxy group, a 2-methylpentoxy group, a 3-methylpentoxy group, a 2,2-dimethylbutoxy group, a 2,3-dimethylbutoxy group, a n-heptoxy group, a 2-methylhexoxy group, a 3-methylhexoxy group, a 2,2-dimethylpentoxy group, a 2,3-dimethylpentoxy group, a 2,4-dimethylpentoxy group, a 3,3-dimethylpentoxy group, a 3-ethylpentoxy group, a 2,2,3-trimethylbutoxy group, a n-octoxy group, an isooctoxy group, a 2-ethylhexoxy group, a nonynoxy group, and a decyloxy group.

In the case where $R^{11}$ is a substituted alkoxy group, a substituent thereof is a hydroxy group or an amino group.

Examples of the alkoxy group having a hydroxyl group as a substituent include a hydroxymethyleneoxy group, a hydroxyethyleneoxy group, a hydroxypropyleneoxy group, and a hydroxybutyleneoxy group.

Examples of the alkoxy group having an amino group as a substituent include an aminomethyleneoxy group, an aminoethyleneoxy group, an aminopropyleneoxy group, and an aminobutyleneoxy group.

Examples of the alkoxy group having both a hydroxy group and an amino group as substituents include a hydroxyaminomethylidyneoxy group, a hydroxyaminoethylidyneoxy group, and a hydroxyaminopropylidyneoxy group.

Among these, $R_{11}$ is preferably substituted or unsubstituted alkoxy group, and more preferably an unsubstituted alkoxy group.

(2) $R^{12}$, $R^{13}$, and $R^{14}$

In the general formula (I), $R^{12}$, $R^{13}$, and $R^{14}$ each independently represents: a hydrogen atom; an alkyl group which may contain at least one substituent selected from the group consisting of a hydroxy group and an amino group; or an aryl group which may contain at least one substituent selected from the group consisting of a hydroxy group and an amino group. The amino group may form a ring by binding two of the substituents together. At least two of $R^{12}$, $R^{13}$, and $R^{14}$ are not hydrogen atoms.

Examples of the above-mentioned alkyl group and the above-mentioned aryl group include the same groups as those mentioned as "$R^{11}$".

Examples of the amino group that forms a ring by binding two of the substituents together include cyclic secondary amino groups, such as an ethyleneimino group, an azacyclobutyl group, a pyrrolidyl group, and a piperidyl group.

Among these, it is preferable that $R^{12}$ represent a hydrogen atom or a substituted or unsubstituted alkyl group and $R^{13}$ and $R^{14}$ each independently represent a substituted or unsubstituted alkyl group, and more preferably $R^{12}$ represent a hydrogen atom or an unsubstituted alkyl group and $R^{13}$ and $R^{14}$ each independently represent an unsubstituted alkyl group.

In the compound (I), it is preferable from the viewpoint of easy industrial availability and excellent curability at a low temperature that $R^{11}$ represent an alkoxy group, $R^{12}$ represent a hydrogen atom or an alkyl group, and both $R^{13}$ and $R^{14}$ represent alkyl groups. The blocking agent may contain the above-mentioned compound (I) alone or at least two thereof in combination.

Furthermore, in the case where the compound (I) has a tert-butyl ester structure or a tert-pentyl ester structure, the curability at a low temperature when made into a resin film tends to become excellent. In the case where the compound (I) has a sec-butyl ester structure or an iso-propyl ester structure, the storage stability when made into a resin composition tends to become excellent.

Preferable examples of the compound (I) include di-tert-butyl malonate, di-tert-pentyl malonate, di-sec-butyl malonate, diisopropyl malonate, tert-butylethyl malonate, and isopropylethyl malonate.

Among these, di-tert-butyl malonate, di-tert-pentyl malonate, di-sec-butyl malonate or diisopropyl malonate is preferable from the viewpoint of the curability at a low temperature when made into a resin film, and di-tert-butyl malonate or diisopropyl malonate is further preferable from the viewpoint of dispersion stability in water.

As the blocking agent used to prepare the blocked polyisocyanate, a compound (B) having a heterocyclic ring containing at least one nitrogen atom may be used.

It is preferable from the viewpoint of the curability at a low temperature that the compound (B) having a heterocyclic ring containing at least one nitrogen atom be a compound having a heterocyclic ring containing at least two nitrogen atoms, and more preferably a compound having a heterocyclic ring containing at least three nitrogen atoms.

Examples of the compound having a heterocyclic ring containing at least one nitrogen atom include the following compounds:

1) aziridine-based blocking agents such as ethyleneimine;

2) azetidine-based blocking agents such as azecyclobutane;
3) azolidine-based blocking agents such as pyrrolidine;
4) azole-based blocking agents such as pyrrole and 2H-pyrrole;
5) imidazoline-based blocking agents such as 2-methylimidazoline and 2-phenylimidazoline;
6) pyrimidine-based blocking agents such as 2-methyl-1,4,5,6-tetrahydropyrimidine;
7) diazole-based blocking agents such as pyrazole, 3-methylpyrazole, 3,5-dimethylpyrazole, imidazole, 2-methylimidazole, 4-methylimidazole, 2-ethylimidazole, 2-isopropylimidazole, 2,4-dimethylimidazole, 2-ethyl-4-methylimidazole, 2-phenylimidazole, 4-methyl-2-phenylimidazole, benzoimidazole, and 2-methylbenzimidazole;
8) triazole-based blocking agents such as 1,2,4-triazole, 1,2,3-triazole, and 3,5-dimethyl-1,2,4-triazole; and
9) tetrazole-based blocking agents such as 1H-1,2,3,4-tetrazole.

Among these, the triazole-based blocking agents 8) such as 1,2,4-triazole or 1,2,3-triazole are preferable.

(Other blocking agents)

The blocking agent used to prepare the blocked polyisocyanate may further contain another blocking agent in addition to the compound (I) or the compound (B) having a heterocyclic ring containing at least one nitrogen atom within a range in which the storage stability when made into a resin composition and the curability at a low temperature when made into a resin film are not deteriorated.

The amount of the above-mentioned compound (I) or the compound (B) having a heterocyclic ring containing at least one nitrogen atom, relative to the total mol of the blocking agents used to prepare the blocked polyisocyanate, is preferably 5% by mol or more, more preferably 50% by mol or more, even more preferably 70% by mol or more, even more preferably 80% by mol or more, even more preferably 90% by mol or more, and even more preferably 100% by mol.

In the case where the amount of the above-mentioned compound (I) or the compound (B) having a heterocyclic ring containing at least one nitrogen atom is within the above-mentioned range, the curability at a low temperature when made into a resin film is further improved.

Examples of the another blocking agent include: 1) alcohol-based compounds; 2) alkylphenol-based compounds; 3) phenol-based compounds; 4) active methylene-based compounds different from the compound (I); 5) mercaptan-based compounds; 6) acid amide-based compounds; 7) acid imide-based compounds; 8) imidazole-based compounds; 9) urea-based compounds; 10) oxime-based compounds; 11) amine-based compounds; 12) imide-based compounds; 13) bisulfites; 14) pyrazole-based compounds; and 15) triazole-based compounds. Specific examples of the blocking agent include the following compounds.

1) Alcohol-based compounds: such as methanol, ethanol, 2-propanol, n-butanol, sec-butanol, 2-ethyl-1-hexanol, 2-methoxyethanol, 2-ethoxyethanol, and 2-butoxy ethanol.
2) Alkylphenol-based compounds: such as mono or dialkylphenols substituted with an alkyl group having a carbon number of 4 or more. Specific examples of the alkylphenol-based compounds include: monoalkylphenols such as n-propylphenol, isopropylphenol, n-butylphenol, sec-butylphenol, tert-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-tert-butylphenol, di-sec-butylphenol, di-n-octylphenol, di-2-ethylhexylphenol, and di-n-nonylphenol.
3) Phenol-based compounds: such as phenol, cresol, ethylphenol, styreneated phenol, and hydroxybenzoic acid ester.
4) Active methylene-based compounds: such as dimethyl malonate, diethyl malonate, methyl acetoacetate, ethyl acetoacetate, and acetylacetone.
5) Mercaptan-based compounds: such as butylmercaptan, and dodecylmercaptan.
6) Acid amide-based compounds: such as acetanilide, acetamide, ε-caprolactam, δ-valerolactam, and γ-butyrolactam.
7) Acid imide-based compounds: such as succinic acid imide, and maleic acid imide.
8) Imidazole-based compounds: such as imidazole, and 2-methylimidazole.
9) Urea-based compounds: such as urea, thiourea, and ethylene urea.
10) Oxime-based compounds: such as formaldoxime, acetaldoxime, acetoxime, methylethylketoxime, and cyclohexanonoxime.
11) Amine-based compounds: such as diphenylamine, aniline, carbazole, di-n-propylamine, diisopropylamine, and isopropylethylamine.
12) Imine-based compounds: such as ethylene imine, and polyethylene imine.
13) Bisulfite compounds: such as sodium bisulfite.
14) Pyrazole-based compounds: such as pyrazole, 3-methylpyrazole, and 3,5-dimethylpyrazole.

15) Triazole-based compounds: such as 3,5-dimethyl-1,2,4-triazole.

[Hydrophilic compound]

A part or all of the blocked polyisocyanate contained in the blocked polyisocyanate composition according to the present embodiment may have a structure unit derived from a hydrophilic compound.

That is, a part or all of the blocked polyisocyanate contained in the blocked polyisocyanate composition according to the present embodiment may be a hydrophilic blocked polyisocyanate.

It is preferable that the hydrophilic compound have at least one active hydrogen group that reacts with an isocyanate group of the polyisocyanate, relative to one molecule of the hydrophilic compound, so as to allow the reaction with one isocyanate group. Specific examples of the active hydrogen group include a hydroxyl group, a mercapto group, a carboxylic acid group, an amino group, and a thiol group.

Examples of a hydrophilic group include nonionic hydrophilic groups, cationic hydrophilic groups, and anionic hydrophilic groups. One of the hydrophilic groups may be used alone, or a combination of at least two thereof may be used. Among these, the hydrophilic group is preferably a nonionic hydrophilic group from the viewpoint of easy availability and resistance to electrical interaction with the formulated components, and is preferably an anionic hydrophilic group from the viewpoint of suppressibility of the decrease in the hardness of the resultant resin film.

(Hydrophilic compound having nonionic hydrophilic group)

Specific examples of the hydrophilic compound having a nonionic hydrophilic group include monoalcohols, and compounds formed by adding an ethylene oxide to a hydroxyl group of an alcohol. Examples of the monoalcohols include methanol, ethanol, and butanol. Examples of the compounds formed by adding an ethylene oxide to a hydroxyl group of an alcohol include ethylene glycol, diethylene glycol, polyethylene glycol, and polyethylene glycol monomethyl ether. The hydrophilic compounds having a nonionic hydrophilic group have an active hydrogen group that reacts with an isocyanate group.

The addition number of ethylene oxide of the compounds formed by addition of ethylene oxide is preferably 4 to 30, and more preferably 4 to 20. In the case where the addition number of ethylene oxide is the above-mentioned lower limit or more, the dispersibility in water tends to be further effectively imparted to the blocked polyisocyanate composition. In the case where the addition number of ethylene oxide is the above-mentioned upper limit or less, generation of precipitate in the blocked polyisocyanate composition stored at a low temperature tends to be further suppressed.

Among these, monoalcohols are preferable as hydrophilic compounds having a nonionic hydrophilic group in terms that the dispersibility in water of the blocked polyisocyanate composition can be improved by using a small amount of the monoalcohol.

The lower limit of the amount of the nonionic hydrophilic group added to the blocked polyisocyanate (hereinafter, may be referred to as "amount of nonionic hydrophilic group"), relative to the solid mass of the blocked polyisocyanate composition, is preferably 1% by mass, more preferably 2% by mass, even more preferably 3% by mass, and particularly preferably 4% by mass, from the viewpoint of the dispersion stability in water of the blocked polyisocyanate composition.

The upper limit of the amount of nonionic hydrophilic group, relative to the solid mass of the blocked polyisocyanate composition, is preferably 30% by mass, more preferably 20% by mass, even more preferably 18% by mass, and particularly preferably 15% by mass, from the viewpoint of water resistance of the resultant resin film.

The amount of nonionic hydrophilic group, relative to the non-volatile mass of the blocked polyisocyanate composition, is preferably 1% by mass to 30% by mass, more preferably 2% by mass to 20% by mass, even more preferably 3% by mass to 18% by mass, and particularly preferably 4% by mass to 15% by mass.

In the case where the amount of nonionic hydrophilic group is within the above-mentioned range, the blocked polyisocyanate composition tends to be further dispersed in water, and the water resistance of the resultant resin film tends to be improved.

(Hydrophilic compound having cationic hydrophilic group)

Specific examples of the hydrophilic compound having a cationic hydrophilic group include compounds having both a cationic hydrophilic group and an active hydrogen group. Furthermore, a compound having an active hydrogen group such as a glycidyl group and a compound having a cationic hydrophilic group such as sulfide or phosphine may be combined to be used as hydrophilic compounds. In the case, a compound having an isocyanate group and a compound having an active hydrogen group are reacted in advance to add a functional group such as a glycidyl group, followed by reacting the resultant with a compound such as sulfide or phosphine. A compound having both a cationic hydrophilic group and an active hydrogen group is preferable from the viewpoint of ease of preparation.

Specific examples of the compound having both a cationic hydrophilic group and an active hydrogen group include dimethylethanolamine, diethylethanolamine, diethanolamine, and methyldiethanolamine. A tertiary amino group added using the compound may be quaternized with dimethyl sulfate or diethyl sulfate, for example.
The hydrophilic compound having a cationic hydrophilic group may be reacted with a polyisocyanate in the presence of a solvent. In the case, the solvent is preferably free from any active hydrogen groups, and specific examples thereof include ethyl acetate, propylene glycol monomethyl ether acetate and dipropylene glycol dimethyl ether.
The cationic hydrophilic group added to the blocked polyisocyanate is preferably neutralize with a compound having an anionic group. Specific examples of the anionic group include a carboxy group, a sulfonic acid group, a phosphoric acid group, halogen groups, and a sulfuric acid group.
Specific examples of the compound having a carboxyl group include formic acid, acetic acid, propionic acid, butyric acid, and lactic acid.
Specific examples of the compound having a sulfonic acid group include ethane sulfonic acid.
Specific examples of the compound having a phosphoric acid group include phosphoric acid, and acidic phosphoric acid ester.
Specific examples of the compound having a halogen group include hydrochloric acid.
Specific examples of the compound having a sulfuric acid group include sulfuric acid.
Among these, the compound having an anionic group is preferably a compound having a carboxyl group, and more preferably acetic acid, propionic acid or butyric acid.

(Hydrophilic compound having anionic hydrophilic group)

Specific examples of the anionic hydrophilic group include a carboxy group, a sulfonic acid group, a phosphoric acid group, halogen groups, and a sulfuric acid group.
Specific examples of the hydrophilic compound having an anionic hydrophilic group include compounds having both an anionic group and an active hydrogen group, and further specific examples thereof include compound having, as an anionic group, a carboxy group of monohydroxycarboxylic acids or polyhydroxycarboxylic acids.
Examples of the monohydroxycarboxylic acid include 1-hydroxyacetic acid, 3-hydroxypropanic acid, 12-hydroxy-9-octadecanoic acid, hydroxypivalic acid, and lactic acid.
Examples of the compounds having, as an anionic group, a carboxy group of polyhydroxycarboxylic acids include dimethylol acetic acid, 2,2-dimethylol butyric acid, 2,2-dimethylol pentanoic acid, dihydroxysuccinic acid, and dimethylol propionic acid.
Furthermore, compounds having both a sulfonic acid group and an active hydrogen group may be used, and specific examples thereof include isethionic acid.
Among these, the compound having both an anionic group and an active hydrogen group is preferably hydroxylpivalic acid or dimethylol propionic acid.
The anionic hydrophilic group added to the blocked polyisocyanate is preferably neutralize with an amine-based compound which is a basic substance.
Specific examples of the amine-based compound include ammonia, and water-soluble amino compounds.
Specific examples of the water-soluble amino compound include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. Furthermore, tertiary amines such as triethylamine or dimethylethanolamine may be used. One of the amine-based compounds may be used alone or a combination of at least two thereof may be used.

<Anionic dispersion agent>

The presence of an anionic dispersion agent having a surface tension of 32 mN/m to 51 mN/m in the blocked polyisocyanate composition according to the present embodiment improves both emulsification property in water when mixed with a water-based coating liquid, and dispersion stability in water, the surface tension being measured at 25°C by the above-mentioned measurement method. Thus, the storage stability when made into a resin composition becomes favorable. The inventors of the present invention found that the dispersion agent that can exert such effects is an anionic dispersion agent having a surface tension within the above-mentioned range, and the presence of an anionic dispersion agent having a surface tension outside the above-mentioned range, a nonionic dispersing agent, a cationic dispersing agent, or an amphoteric dispersing agent cannot exert the effects sufficiently.
The anionic dispersion agent is at least one of or at least two of ammonium polyoxyethylene polycyclic phenyl ether sulfate, sodium polyoxyethylene polycyclic phenyl ether sulfate, ammonium polyoxyethylene alkylether sulfate, and sodium polyoxyethylene alkylether sulfate.

The amount of the anionic dispersion agent, relative to 100 parts by mass of the blocked polyisocyanate, is preferably 0.01 parts by mass to 5 parts by mass, more preferably 0.05 parts by mass to 3 parts by mass, more preferably 0.10 parts by mass to 2 parts by mass, and even more preferably 0.14 parts by mass to 1.6 parts by mass. In the case where the amount of the anionic dispersion agent is the above-mentioned lower limit or more, the storage stability of the resultant resin composition is further improved. In contrast, in the case where the amount is the above-mentioned upper limit or less, the tensile strength of the resultant resin film is further improved.

<Carboxylate salt>

The blocked polyisocyanate composition further contains a carboxylate salt, when the blocking agent contains the compound (B) having a heterocyclic ring containing at least one nitrogen atom.
Examples of the carboxylate salt include quaternary ammonium carboxylate salts, the counter cation of which is a quaternary ammonium ion; and metal carboxylate salts, the counter cation of which is a metal ion. The carboxylate salt is preferably a metal carboxylate salt from the viewpoint of the curability at a low temperature.
Examples of the quaternary ammonium carboxylate salts (carboxylate salts of quaternary ammonium cations) include the following compounds.

(1) Organic weak acid salts, such as acetic acid salts, propionic acid salts, octylic acid salts, capric acid salts, myristic acid salts, or benzoic acid salts, of tetraalkyl ammoniums, such as tetramethyl ammonium, tetraethyl ammonium, or tetrabutyl ammonium.
(2) Organic weak acid salts, such as acetic acid salts, propionic acid salts, octylic acid salts, capric acid salts, myristic acid salts, or benzoic acid salts, of aryltrialkyl ammoniums, such as benzyltrimethyl ammonium, or trimethylphenyl ammonium.
(3) Organic weak acid salts, such as acetic acid salts, propionic acid salts, octylic acid salts, capric acid salts, myristic acid salts, or benzoic acid salts, of trimethylhydroxyethyl ammonium, trimethylhydroxypropyl ammonium, triethylhydroxyethyl ammonium, or triethylhydroxypropyl ammonium.

Examples of the metal of the metal carboxylate salt include sodium, potassium, lithium, cesium, nickel, cobalt, cadmium, barium, calcium, zinc, manganese, copper, cerium, zirconium, iron, lead, germanium, antimony, aluminum, titanium, and bismuth. Among these, the metal is preferably a monovalent metal, from the viewpoint of storage stability of the blocked polyisocyanate composition, and more preferably a Group 1 element such as sodium, potassium, lithium, or cesium, from the viewpoint of the curability at a low temperature.
The carboxylic acid of the metal carboxylate salt may be a monocarboxylic acid or a dicarboxylic acids, and examples thereof include aliphatic saturated acids, unsaturated acids, and aromatic acids, such as formic acid, acetic acid, acrylic acid, methacrylic acid, propionic acid, butyric acid, hexanoic acid, octylic acid, octanoic acid, capric acid, stearic acid, oleic acid, eicosanoic acid, myristic acid, and benzoic acid. Among these, the carbon number of the carboxylic acid of the metal carboxylate salt is preferably 1 to 12 from the viewpoint of compatibility, and C1-12 aliphatic acids are preferable from the viewpoint of the anti-yellowing properties of the resultant coating film.
Preferable examples of the metal carboxylate salts include sodium propionate, potassium acetate, potassium propionate, potassium 2-ethylhexanoate, cesium acetate, lithium acetate, and bismuth 2-ethylhexanoate, and potassium acetate is preferable.
The amount of the counter cation of the carboxylate salt, relative to the total mass of the blocked polyisocyanate, is preferably 0.1% by mass to 20% by mass, more preferably 0.3% by mass to 15% by mass, and even more preferably 0.5% by mass to 10% by mass, from the viewpoint of the storage stability of the blocked polyisocyanate composition.
The amount of the counter cation can be determined by ion chromatography of a sample mixed with ultrapure water to obtain an aqueous layer, followed by filtering the aqueous layer through a filter. The measurement conditions are shown in the Examples.

<Other components>

The blocked polyisocyanate composition according to the present embodiment may further contain an additive such as a solvent in addition to the above-mentioned blocked polyisocyanate and the above-mentioned anionic dispersion agent.
Examples of the solvent include 1-methylpyrrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, 3-methoxy-3-methyl-1-butanol, ethylene glycol diethyl ether, diethylene glycol diethyl ether, ethylene glycol dimethyl ether, diethylene glycol dimethyl ether, dipropylene glycol dimethyl ether, propylene glycol dimethyl ether, methyl ethyl ketone, acetone, methyl isobutyl ketone, propylene glycol monomethyl ether acetate,

ethanol, methanol, iso-propanol, 1-propanol, iso-butanol, 1-butanol, 2-ethylhexanol, cyclohexanol, ethylene glycol, diethylene glycol, triethylene glycol, propylene glycol, dipropylene glycol, 1,4-butanediol, 1,3-butanediol, ethyl acetate, isopropyl acetate, butyl acetate, toluene, xylene, pentane, iso-pentane, hexane, isohexane, cyclohexane, solvent naphtha, and mineral spirits. One of these solvents may be used alone or a combination of at least two thereof may be used. The solvent is preferably a solvent having a water-solubility of 5% by mass or more from the viewpoint of dispersibility in water, and specific examples thereof include dipropylene glycol monomethyl ether.

<Preparation method of blocked polyisocyanate composition>

The blocked polyisocyanate composition may be obtained by reacting the above-mentioned polyisocyanate and the above-mentioned blocking agent, for example.

The blocking reaction of the polyisocyanate and the blocking agent may be conducted in the presence or absence of a solvent to obtain a blocked polyisocyanate.

As the blocking agent, one of the above-mentioned compound (I) or the compound (B) having a heterocyclic ring containing at least one nitrogen atom may be used alone, or at least two of the above-mentioned compound (I) or the compound (B) having a heterocyclic ring containing at least one nitrogen atom may be used in combination thereof, and another blocking agent mentioned above may be further used.

The addition amount of the blocking agent, relative to the total mol of the isocyanate group, is generally 80% by mol to 200% by mol, preferably 90% by mol to 150% by mol, and even more preferably 93% by mol to 130% by mol.

In the case where a solvent is used, a solvent inert against an isocyanate group may be used.

In the case where a solvent is used, the amount of non-volatile components derived from the polyisocyanate and the blocking agent, relative to 100 parts by mass of the blocked polyisocyanate composition, may be generally 10 parts by mass to 95 parts by mass, preferably 15 parts by mass to 80 parts by mass, and even more preferably 20 parts by mass to 75 parts by mass.

In the blocking reaction, an organic metallic salt, such as tin, zinc or lead salt, a tertiary amine-based compound, or an alkolate of an alkali metal such as sodium may be used as a catalyst.

Although the addition amount of the catalyst varies depending on the blocking reaction temperature or the like, the addition amount, relative to 100 parts by mass of the polyisocyanate, may be generally 0.05 parts by mass to 1.5 parts by mass, and preferably 0.1 parts by mass to 1.0 parts by mass.

The blocking reaction may be conducted generally at -20°C to 150°C, preferably 0°C to 100°C, and more preferably 10°C to 70°C. In the case where the blocking reaction temperature is the above-mentioned lower limit or more, the reaction speed can be increased. In the case where the blocking reaction temperature is the above-mentioned upper limit or less, the side-reaction can be further suppressed.

After the blocking reaction, neutralization may be conducted by adding an acidic compound or the like.

As the acidic compound, an inorganic acid or an organic acid may be used. Examples of the inorganic acid include hydrochloric acid, phosphorus acid, and phosphoric acid. Examples of the organic acid include methanesulfonic acid, p-toluenesulfonic acid, dioctylphthalate, and dibutylphthalate.

In the case where a blocked polyisocyanate composition is prepared using both a hydrophilic compound and a blocking agent, the above-mentioned polyisocyanate, the above-mentioned hydrophilic compound and the above-mentioned blocking agent may be reacted to obtain the blocked polyisocyanate composition, for example.

The reaction of an isocyanate group of the polyisocyanate and the hydrophilic compound, and the reaction of the polyisocyanate and the blocking agent may be conducted simultaneously, or, one of the reactions may be conducted in advance, followed by conducting the other reaction. Among these, it is preferable that the reaction of an isocyanate group and the hydrophilic compound be conducted in advance to obtain a polyisocyanate composition modified with the hydrophilic compound (hereinafter, may be referred to as "modified polyisocyanate composition"), followed by reacting the resultant modified polyisocyanate composition and the blocking agent.

In the reaction of the polyisocyanate and the hydrophilic compound, an organic metallic salt, a tertiary amine-based compound, or an alkolate of alkali metal may be used as a catalyst. Examples of metal constituting the organic metallic salt include tin, zinc, and lead. Examples of the alkali metal include sodium.

The reaction of the polyisocyanate and the hydrophilic compound is preferably conducted at -20°C to 150°C, and more preferably at 30°C to 130°C. In the case where the reaction temperature is the above-mentioned lower limit or more, the reactivity tends to be further increased. In the case where the reaction temperature is the above-mentioned upper limit or less, the side-reaction tends to be further effectively suppressed.

It is preferable that the hydrophilic compound be completely reacted with the polyisocyanate such that the hydrophilic compound does not remain in an unreacted state. The absence of the unreacted hydrophilic compound tends to further suppress effectively the decrease in the dispersion stability in water of the blocked polyisocyanate composition and the curability at a low temperature when made into a resin film.

The blocking reaction of the modified polyisocyanate composition and the blocking agent may be conducted

by the method mentioned above for the blocking reaction.

<<Resin composition>>

A resin composition according to the second embodiment of the present invention contains: the blocked polyisocyanate composition according to the first embodiment mentioned above; and a polyvalent hydroxy compound. The resin composition according to the present embodiment may also be referred to as a one-liquid type resin composition containing: a curing agent component; and the main agent component.
The resin composition according to the present embodiment makes it possible to obtain a resin film having excellent storage stability and curability at a low temperature.
Components of the resin composition according to the present embodiment will be explained below specifically.

<Polyvalent hydroxy compound>

In the present specification, the term "polyvalent hydroxy compound" means a compound having at least two hydroxy groups (hydroxyl groups) in one molecule thereof, and is also referred to as "polyol".
Specific examples of the polyvalent hydroxy compound include aliphatic hydrocarbon polyols, polyether polyols, polyester polyols, epoxy resins, fluorine-containing polyols, and acrylic polyols.
Among these, the polyvalent hydroxy compound is preferably a polyester polyol, a fluorine-containing polyol, or an acrylic polyol.

[Aliphatic hydrocarbon polyols]

Examples of the aliphatic hydrocarbon polyols include polybutadienes having hydroxylated terminal and hydrogen additives thereof.

[Polyether polyols]

Examples of the polyether polyols include polyether polyols obtained by any one of the following methods (1) to (3).

(1) Polyether polyols or polytetramethylene glycols obtained by adding at least one alkylene oxide to at least one polyvalent alcohol.
(2) Polyether polyols obtained by reacting an alkylene oxide with a polyfunctional compound.
(3) Polymer polyols obtained by polymerizing acrylamides using the polyether polyols obtained by the method (1) or (2) as mediums.

Examples of the polyvalent alcohol include glycerine and propylene glycol.
Examples of the alkylene oxide include ethylene oxide and propylene oxide.d
Examples of the polyfunctional compound include ethylene diamine, and ethanolamine.

[Polyester polyols]

Examples of the polyester polyols include the following polyester polyols (1) and (2).

(1) Polyester polyols obtained by subjecting either a dibasic acid or a mixture of at least two thereof and either a polyvalent alcohol or a mixture of at lest two thereof to condensation reaction.
(2) Polycaprolactones obtained by subjecting ε-caprolactone to ring-opening polymerization using a polyvalent alcohol.

Examples of the dibasic acid include carboxylic acids such as succinic acid, adipic acid, dimeric acid, maleic anhydride, phthalic anhydride, isophthalic acid, terephthalic acid, and 1,4-cyclohexanedicarboxylic acid.
Examples of the polyvalent alcohol include ethylene glycol, propylene glycol, diethylene glycol, 1,4-butanediol, neopentyl glycol, 1,6-hexanediol, trimethyl pentanediol, cyclohexanediol, trimethylolpropane, glycerin, pentaerythritol, 2-methylol propanediol, and ethoxylated trimethylolpropane.

[Epoxy resins]

Examples of the epoxy resins include: epoxy resins such as novolac-type epoxy resins, β-methylepichloro-type epoxy resins, cyclic oxirane-type epoxy resins, glycidyl ether-type epoxy resins, glycol ether-type epoxy resins, epoxy-type aliphatic unsaturated compounds, epoxidated fatty acid esters, ester-type polyvalent carboxylic acids, aminoglycidyl-type epoxy resins, halogenated epoxy resins, and resorcine-type epoxy resins; and resins obtained by modifying the epoxy resins with an amino compound, a polyamide compound, or the like.

[Fluorine-containing polyols]

Examples of the fluorine-containing polyols include: fluoroolefins disclosed in Reference Document 1 (Japanese Unexamined Patent Application Publication No. Sho 57-34107) and Reference Document 2 (Japanese Unexamined Patent Application Publication No. Sho 61-275311); and copolymers of cyclohexylvinyl ethers, hydroxyalkylvinyl ethers, vinyl monocarboxylates, or the like.

[Acrylic polyols]

An acrylic polyol may be obtained, for example, by polymerizing polymerizable monomers having at least one active hydrogen in one molecule thereof, or copolymerizing polymerizable monomers having at least one active hydrogen in one molecule thereof with other monomers copolymerizable with the polymerizable monomers, as needed.

Examples of the polymerizable monomers having at least one active hydrogenin one molecule thereof include the following (i) to (iii). One of these may be used alone, or a combination of at least two thereof may be used.

(i) Acrylic acid esters having an active hydrogen, such as 2-hydroxyethyl acrylate, 2-hydroxypropyl acrylate, and 2-hydroxybutyl acrylate.
(ii) Methacrylic acid esters having an active hydrogen, such as 2-hydroxyethyl methacrylate, 2-hydroxypropyl methacrylate, and 2-hydroxybutyl methacrylate.
(iii) (Meth)acrylic acid esters having a polyvalent active hydrogen, such as acrylic acid monoesters or methacrylic acid monoesters of glycerin, and acrylic acid monoesters or methacrylic acid monoesters of trimethylolpropane.

Examples of the other monomers copolymerizable with the polymerizable monomers include the following (i) to (v). One of these may be used alone or a combination of at least two thereof may be used.

(i) Acrylic acid esters such as methyl acrylate, ethyl acrylate, isopropyl acrylate, n-butyl acrylate, and 2-ethylhexyl acrylate.
(ii) Methacrylic acid esters such as methyl methacrylate, ethyl methacrylate, isopropyl methacrylate, n-butyl methacrylate, isobutyl methacrylate, n-hexyl methacrylate, cyclohexyl methacrylate, lauryl methacrylate, and glycidyl methacrylate.
(iii) Unsaturated carboxylic acids such as acrylic acid, methacrylic acid, maleic acid, and itaconic acid.
(iv) Unsaturated amides such as acrylamide, N-methylol acrylamide, and diacetone acrylamide.
(v) Styrene, vinyl toluene, vinyl acetate, acrylonitrile, and the like.

Additional examples of the acrylic polyols include acrylic polyols obtained by copolymerizing polymerizable ultraviolet-stable monomers disclosed in Reference Document 3 (Japanese Unexamined Patent Application Publication No. Hei 1-261409) or Reference Document 4 (Japanese Unexamined Patent Application Publication No. Hei 3-006273).

Specific examples of the polymerizable ultraviolet-stable monomers include 4-(meth)acryloyloxy-2,2,6,6-tetramethylpiperidine, 4-(meth)acryloylamino-2,2,6,6-tetramethylpiperidine, 1-crotonoyl-4-crotonoyloxy-2,2,6,6-tetramethylpiperidine, and 2-hydroxy-4-(3-methacryloxy-2-hydroxypropoxy)benzophenone.

For example, the above-mentioned monomer components are subjected to solution polymerization in the presence of a radical polymerization initiator, such as a conventionally-known peroxide or azo compound, followed by diluting the resultant with an organic solvent or the like, as needed, to obtain an acrylic polyol.

A water-based acrylic polyol is obtained by subjecting an olefinic unsaturated compound to a conventionally-known method, such as solution polymerization to convert the resultant to an aqueous layer, or emulsion polymerization. In the case, an acidic moiety of a monomer containing a carboxylic acid such as an acrylic acid or a methacrylic acid or a monomer containing a sulfonic acid may be neutralized with an amine or ammonia to impart water-solubility or dispersibility in water to the acrylic polyol.

[NCO/OH]

Although the mole equivalent ratio (NCO/OH) of isocyanate groups in the blocked polyisocyanate composition, relative to hydroxyl groups in the polyvalent hydroxy compound contained in the resin composition according to the present embodiment, is determined depending on physical properties required to the resin film, the mole equivalent ratio is generally 0.01 to 22.5.

[Glass transition temperature]

The glass transition temperature of the polyvalent hydroxy compound is preferably 0°C to 100°C, more preferably 0°C to 90°C, even more preferably 0°C to 80°C, and particularly preferably 5°C to 70°C. In the case where the glass transition temperature of the polyvalent hydroxy compound is within the above-mentioned range, a resin film having excellent tensile strength can be obtained. The glass transition temperature of the polyvalent hydroxy compound can be determined by the method mentioned in examples shown below.

[Weight-average molecular weight]

The weight-average molecular weight of the polyvalent hydroxy compound is preferably $5.0\times10^3$ to $2.0\times10^5$, more preferably $5.0\times10^3$ to $1.5\times10^5$, and even more preferably $5.0\times10^3$ to $1.0\times10^5$. In the case where the weight-average molecular weight of the polyvalent hydroxy compound is within the above-mentioned range, a resin film having further excellent physical properties such as tensile strength can be obtained. The weight-average molecular weight of the polyvalent hydroxy compound is weight-average molecular weight determined by gel permeation chromatography (GPC) with reference to polystyrene standards. Specifically, the weight-average molecular weight can be determined by the methods described in examples mentioned below.

[Hydroxy group value]

The hydroxy group value of the polyvalent hydroxy compound is preferably 30 mg KOH/g to 250 mg KOH/g, more preferably 40 mg KOH/g to 200 mg KOH/g, and even more preferably 45 mg KOH/g to 180 mg KOH/g. In the case where the hydroxy group value of the polyvalent hydroxy compound is within the above-mentioned range, a resin film having further excellent physical properties such as tensile strength can be obtained. The hydroxy group value of the polyvalent hydroxy compound can be determined by the method described in examples mentioned below.

The amount of the blocked polyisocyanate in the resin composition according to the present embodiment, relative to 100 parts by mass of the polyvalent hydroxy compound, is preferably 5 parts by mass to 200 parts by mass, more preferably 6 parts by mass to 180 parts by mass, and even more preferably 10 parts by mass to 150 parts by mass. In the case where the amount of the blocked polyisocyanate is within the above-mentioned range, a resin film having further excellent physical properties such as tensile strength can be obtained. The amount of the blocked polyisocyanate may be determined from the amount of the formulation, or may be identified and quantified using nuclear magnetic resonance (NMR) and gas chromatography / mass spectrometry (GC/MS).

<Other additives>

The resin composition according to the present embodiment may further contain other additives.

Examples of the other additives include curing agents that can react with a crosslinking functional group in the polyvalent hydroxy compound, curing catalysts, solvents, pigments (such as extender pigments, coloration pigments, and metallic pigments), ultraviolet absorbers, light stabilizers, radical stabilizers, yellowing-inhibitors that suppress coloration at a baking step, paint-surface adjusting agents, flow adjusting agents, pigment dispersing agents, defoaming agents, thickening agents, and film forming aids.

Examples of the curing agents include melamine resins, urea resins, epoxy group-containing compounds or resins, carboxyl group-containing compounds or resins, acid anhydrides, alkoxysilane group-containing compounds or resins, and hydrazide compounds.

The curing catalyst may be a basic compound, or a Lewis acid compound.

Examples of the basic compound include metal hydroxides, metal alkoxides, metal carboxylates, metal acetylacetinates, hydroxides of onium salts, onium carboxylates, halides of onium salts, metallic salts of active methylene-based compounds, onium salts of active methylene-based compounds, aminosilanes, amines, and phosphines. Preferable examples of the onium salts include ammonium sals, phosphonium salts and sulfonium salts.

Examples of the Lewis acid compound include organic tin compounds, organic zinc compounds, organic titanium compounds, and organic zirconium compounds.

Examples of the solvent include the same solvents as mentioned for the blocked polyisocyanate composition.
As the pigment (such as extender pigment, coloration pigment, metallic pigment), the ultraviolet absorber, the light stabilizer, the radical stabilizer, the yellowing-inhibitor that suppresses coloration at a baking step, the paint-surface adjusting agent, the flow adjusting agent, the pigment dispersing agent, the defoaming agent, the thickening agent or the film forming aid, a conventionally-known one may be selected to be used.

<Preparation method of resin composition>

Although the resin composition according to the present embodiment may be used as a solvent-based composition or a water-based composition, the resin composition is preferably used as a water-based resin composition, because a water-based resin composition having favorable storage stability and excellent curability at a low temperature of 80°C or lower when made into a resin film has not been known yet.
In the case where a water-based resin composition is prepared, an additive, such as a curing agent that can react with a crosslinking functional group in the polyvalent hydroxy compound, a curing catalyst, a solvent, a pigment (such as extender pigment, coloration pigment, or metallic pigment), a ultraviolet absorber, a light stabilizer, a radical stabilizer, a yellowing-inhibitor that suppresses coloration at a baking step, a paint-surface adjusting agent, a flow adjusting agent, a pigment dispersing agent, a defoaming agent, a thickening agent, or a film forming aid is added to the polyvalent hydroxy compound or an aqueous dispersion or an aqueous solution thereof, as needed. Then, the above-mentioned blocked polyisocyanate composition or an aqueous dispersion thereof is added to the resultant as a curing agent, followed by further adding water or a solvent thereto, as needed, to adjust the viscosity of the resultant. Then, the resultant is forcibly stirred using a stirrer to obtain a water-based resin composition.
In the case where a solvent-based resin composition is prepared, an additive, such as a curing agent that can react with a crosslinking functional group in the polyvalent hydroxy compound, a curing catalyst, a solvent, a pigment (such as extender pigment, coloration pigment, or metallic pigment), a ultraviolet absorber, a light stabilizer, a radical stabilizer, a yellowing-inhibitor that suppresses coloration at a baking step, a paint-surface adjusting agent, a flow adjusting agent, a pigment dispersing agent, a defoaming agent, a thickening agent, or a film forming aid is added to the polyvalent hydroxy compound or a solvent dilution thereof, as needed. Then, the above-mentioned blocked polyisocyanate composition is added to the resultant as a curing agent, followed by further adding a solvent thereto, as needed, to adjust the viscosity of the resultant. Then, the resultant is stirred by hands or using a stirrer such as mazelar to obtain a solvent-based resin composition.

<<Resin film>>

The resin film according to the third embodiment is formed by curing the resin composition according to the second embodiment of the present invention. The resin film according to the present embodiment has favorable curability at a low temperature.
The resin film according to the present embodiment is obtained by coating the above-mentioned resin composition on a substrate by using a conventionally-known coating method, such as roll coating, curtain flow coating, spray coating, bell coating, or electrostatic coating, followed by heating to cure the resultant.
The heating temperature is preferably approximately 60°C to 120°C, more preferably approximately 65°C to 110°C, and even more preferably approximately 70°C to 100°C, from the viewpoint of energy conservation and heat resistance of the substrate.
The heating time is preferably approximately 1 minute to 60 minutes, and more preferably approximately 2 minutes to 40 minutes from the viewpoint of energy conservation and heat resistance of the substrate.
The substrate is not particularly limited, and examples thereof include: outer plates of automotive bodies such as passenger cars, trucks, motorcycles, or buses; automotive parts such as bumpers; outer plates of home electric appliances such as cellular phones, or audio appliances; and various films. Among these, the outer plates of the automotive bodies or automotive parts are preferred.
The material of the substrate is not particularly limited, and examples thereof include: metal materials such as iron, aluminum, brass, copper, tin plate, stainless steel, galvanized steel, steel coated with zinc alloy (such as Zn-Al, Zn-Ni, and Zn-Fe); resins such as polyethylene resin, polypropylene resin, acrylonitrile-butadiene-styrene (ABS) resin, polyamide resin, acrylic resin, vinylidene chloride resin, polycarbonate resin, polyurethane resin, and epoxy resin; various plastic materials such as various FRP (fiber reinforced plastics); inorganic materials such as glass, cement, and concrete; and fibrous materials such as wood, paper, and cloth. Among these, metal materials or plastic materials are preferred.
The substrate may be formed by subjecting the surface of the above-mentioned metal material or the metal surface of an automotive body formed from the above-mentioned metal material to surface treatment such as phosphoric acid salt treatment, chromate treatment, or composite oxide treatment, and then further forming a coating film thereon, as needed. The substrate having the coating film may be formed, for example, by conducting the surface treatment, as

needed, and then forming an undercoating thereon, and examples thereof include automotive bodies in which an undercoating of an electrodeposition coating material is formed. The substrate may be formed by subjecting the surface of the above-mentioned plastic material or the plastic surface of an automotive part formed from the above-mentioned plastic to the desired surface treatment. The substrate may also be a combination of a plastic material and a metal material.

The gel fraction of the resin film according to the present embodiment is preferably at least 80% by mass, more preferably at least 84% by mass, and even more preferably 86% by mass, when the resin film is formed by heating the resin composition at 80°C for 30 minutes to be cured to have a thickness of 40 μm, stored at 23°C for 1 week, and then immersed in acetone at 23°C for 24 hours, as shown in examples below mentioned. In the case where the gel fraction is the above-mentioned lower limit or more, the curability at a low temperature is further improved. In contrast, although the upper limit of the gel fraction is not particularly limited, the upper limit may be 100% by mass, for examples. Specific examples of the method for measuring the gel fraction include the method described in examples mentioned below.

The resin film according to the present embodiment preferably has a maximum stress (tensile strength) of 5 MPa or more, more preferably 10 MPa or more, and even more preferably 15 MPa or more, when the maximum stress is measured by tensile test conducted at a tensile speed of 20 mm/minute under conditions of 20 mm of distance between chucks, the resin film being formed by heating the resin composition at 80°C for 30 minutes to be cured in a film thickness of 40 μm, a width of 10 mm and a length of 40 mm. In contrast, although the upper limit of the maximum stress is not particularly limited, the upper limit may be, for example, 80 MPa, or 70 MPa. The method shown in below-mentioned examples specifically may be used for measuring the maximum stress, for example.

The resin film according to the present embodiment has excellent curability at a low temperature, and therefore is preferably used as a coating film of a product in various fields in which energy conservation is required or a material having low heat resistance.

<<Laminated body>>

A laminated body according to the fourth embodiment of the present invention include at least two layers of the resin films according to the third embodiment, constitutions of which are different from each other. The thickness per layer of the laminated body according to the present embodiment is 1 μm to 50 μm. The presence of the resin film mentioned above in the laminated body according to the present embodiment makes the curability at a low temperature be excellent.

The laminated body according to the present embodiment may contain at least two layers of the above-mentioned resin film, the constitutions of which are identical to each other.

The laminated body according to the present embodiment is formed by laminating various coating films including the above-mentioned resin film on an adherend.

Examples of the adherend include glass, various metals, porous members, various coating members, sealant curing material, rubbers, leathers, fibers, non-woven fabrics, resin films and plates, ultraviolet curable acrylic resin layers, and layers formed of inks. Examples of the metals include aluminum, iron, zinc steel plate, copper, and stainless steel. Examples of the porous members include wood, paper, mortar, and stone. Examples of the coating members include fluorine coating member, urethane coating member, and acrylic urethane coating member. Examples of the sealant curing material include silicone-based materials, modified silicone-based materials, and urethane-based materials. Examples of the rubbers include natural rubber, and synthesized rubbers. Examples of the leathers include natural leathers and artificial leathers. Examples of the fibers include plant-based fibers, animal-based fibers, carbon fiber, and glass fiber. Examples of resins that are raw materials to obtain the resin films or plates include polyvinyl chloride, polyester, acryl, polycarbonate, triacetylcellulose, and polyolefin. Examples of the inks include printing inks and UV inks.

The laminated body according to the present embodiment is obtained by coating layers of the above-mentioned resin compositions, constitutions of which are different from each other, on an adherend by using a conventionally-known coating method, such as roll coating, curtain flow coating, spray coating, bell coating, or electrostatic coating, the coated layers being cured by heating, respectively, or by coating all layers of the above-mentioned resin compositions, followed by curing the all layers by heating at once.

The laminated body according to the present embodiment may further include a primer layer, an adhesive layer, a decoration layer, and layers formed from conventionally-known components, in addition to the above-mentioned resin film.

EXAMPLES

Hereinafter, although the present invention will be described further specifically by showing examples and comparative examples, the present invention is not limited to these examples.

«Examples 1-1 to 1-18 and Comparative Examples 1-1 to 1-6»

<Test items>

Physical properties of blocked polyisocyanate compositions obtained in examples and comparative examples were measured and evaluated by the following methods.

[Physical property 1-1]

(Amount of isocyanate groups (NCO))

A polyisocyanate before being blocked with a blocking agent was used as a measurement sample to determine the NCO amount of the polyisocyanate.

2 g to 3 g of a measurement sample was accurately weighed (W g) in a conical flask. Then, 20 ml of toluene was added thereto to dissolve the measurement sample therein. Then, 20 mL of a toluene solution of 2N di-n-butylamine was added thereto, and then mixed, followed by leaving the mixture at room temperature for 15 minutes. Then, 70 mL of isopropyl alcohol was added thereto, and then mixed. Then, the solution was subjected to titration with a 1N hydrochloric acid solution (Factor F) using an indicator to obtain a titration value V2 mL. In addition, a titration value V1 mL was obtained by titration conducted in a similar manner to that described above except that no polyisocyanate sample was used. The amount of isocyanate groups (NCO) of the polyisocyanate (NCO amount) (% by mass) was calculated in accordance with the following formula.

$$\text{NCO amount (\% by mass)} = (V1 - V2)\times F\times 42 / (W\times 1000)\times 100$$

[Physical property 1-2]

(Number average molecular weight)

The number average molecular weight is determined by gel permeation chromatography (GPC) with reference to polystyrene standards using the following device. A polyisocyanate before being blocked with a blocking agent was used as a measurement sample to determine the number average molecular weight of the polyisocyanate. Measurement conditions are shown below.

(Measurement conditions)

Device: HLC-802A (manufactured by Tosoh Corporation)
Column: G1000HXL × 1 column, G2000HXL × 1 column, G3000HXL × 1 column (all of these were manufactured by Tosoh Corporation.)
Carrier: Tetrahydrofuran
Detection method: Differential refractometer

[Physical property 1-3]

(Average number of isocyanate functional groups)

The average number of isocyanate functional groups in the polyisocyanate (average NCO number) was determined in accordance with the following formula. In the formula, the term "Mn" means the number average molecular weight of a polyisocyanate before being blocked with a blocking agent in a blocked polyisocyanate composition and the value determined in the above-mentioned "physical property 1-2" was used. The term "NCO amount" means the amount of isocyanate groups measured before being blocked with a blocking agent in a blocked polyisocyanate composition, and the value determined in the above-mentioned "physical property 1-1" was used.

$$\text{Average number of isocyanate functional groups} = (\text{Mn} \times \text{NCO amount} \times 0.01) / 42$$

[Physical property 1-4]

(Amount of solid content in blocked polyisocyanate composition)

The amount of solid content in the blocked polyisocyanate composition was determined as described below.

The weight of an aluminum plate having a bottom diameter of 38 mm was measured. Then, approximately 1 g of a blocked polyisocyanate composition prepared in an examples or comparative example was placed on the aluminum plate, and the weight thereof (W1) was measured. Then, the thickness of the blocked polyisocyanate composition was adjusted to be uniform. Then, the blocked polyisocyanate composition placed on the aluminum plate was maintained at 105°C in an oven for 1 hour. Then, when the temperature of the aluminum plate decreased to room temperature, the weight (W2) of the blocked polyisocyanate composition remaining on the aluminum plate was measured. Then, the amount of solid content (% by mass) in the blocked polyisocyanate composition was calculated in accordance with the following formula.

$$\text{Amount of solid content [\% by mass] in blocked polyisocyanate composition} = W2/W1 \times 100$$

[Physical property 1-5]

(Surface tension of dispersing agent at 25°C)

Each dispersing agent used in the examples and comparative examples was diluted with water to prepare an aqueous solution of the dispersing agent consisting of: 0.1% by mass of the anionic dispersion agent, relative to the total mass of the aqueous solution; and water. Then, the resultant aqueous solution of the dispersing agent was used to measure the surface tension at 25°C by Wilhelmy method.

[Preparation of resin composition]

An acrylic polyol (manufactured by Nuplex, Setaqua (registered trademarks) 6515 (trade name), OH (%) (on solids) = 3.3, Acid value (mg KOH/g) = 9.9, resin component 45%), and each blocked polyisocyanate composition were mixed such that the molar ratio of isocyanate groups relative to hydroxyl groups (isocyanate groups / hydroxyl groups) became 1, followed by adding ion exchanged water thereto such that the amount of solid content became 40% by mass to obtain a resin composition.

[Evaluation 1-1] Storage stability

The viscosity of 20 g of the resultant resin composition at an initial stage, and that of 20 g of the resultant resin composition put into a 20 mL glass bottle, and then stored at 40°C for 10 days were measured using a viscometer manufactured by TOKI SANGYO CO., LTD., under the trade name of RE-85R. The ratio of the viscosity after storage relative to the viscosity at the initial stage was calculated. The case in which the ratio of the viscosity after storage relative to the viscosity at the initial stage was 2.5 or less and neither gelation nor precipitation was confirmed was evaluated as favorable, and the case in which the ratio of the viscosity after storage relative to the viscosity at the initial stage exceeded 1 but was closed to 1, or 1 or less was evaluated as particularly favorable.

[Evaluation 1-2] Curability at low temperature

The resultant resin composition was coated on a polypropylene (PP) plate such that a dried film thickness became 40 μm, dried at 80°C for 30 minutes by heating to form a resin film. The resultant resin film was stored at ordinary temperature (23°C) for 1 week to measure the gel fraction. The gel fraction was determined as a percentage (% by mass) by dividing the mass of the undissolved portion when the resin film was immersed in acetone at 23°C for 24 hours by the mass of the resin film before being immersed. In the case where the gel fraction was 80% by mass or more, the resultant resin film was evaluated as favorable.

<Synthesis of polyisocyanate>

[Synthesis Example 1-1]

(Synthesis of polyisocyanate P-1)

100 parts by mass of HDI and 5.1 parts by mass of polyester polyol (manufactured by Daicel Corporation, "PLACCEL 303" (trade name)) derived from a trivalent alcohol and ε-caprolactone were charged into a four-necked flask equipped with a thermometer, a stirrer blade and a reflux cooling tube in a nitrogen flow, and then the mixture was stirred while maintaining the temperature in the reactor at 90°C for 1 hour to allow a urethane-forming reaction to proceed. Then, the temperature in the reactor was maintained at 60°C, tetramethylammonium caprylate, that is an isocyanurate-forming catalyst, was added to the resultant, followed by adding a phosphoric acid when the yield reached 51% by mass to terminate the reaction. The reaction liquid was subjected to filtration, and then an unreacted HDI was removed therefrom using a thin film evaporator to obtain an isocyanurate-type polyisocyanate (hereinafter, may be referred to as "polyisocyanate P-1"). The NCO amount of the resultant polyisocyanate P-1 was 18.8% by mass, the number average molecular weight thereof was 1130, and the average number of isocyanate groups was 5.1. The resultant polyisocyanate P-1 was subjected to GPC analysis and $^1$H-NMR analysis to confirm the presence of an isocyanurate trimer.

[Synthesis Example 1-2]

(Synthesis of polyisocyanate P-2)

80 parts by mass of HDI, 20 parts by mass of IPDI, and 3.4 parts by mass of trimethylolpropane that is a trivalent alcohol were charged into a four-necked flask equipped with a thermometer, a stirrer blade and a reflux cooling tube in a nitrogen flow, and then the mixture was stirred while maintaining the temperature in the reactor at 90°C for 1 hour to allow a urethane-forming reaction to proceed. Then, the temperature in the reactor was maintained at 77°C, 0.012 parts by mass of tetramethylammonium caprylate, that is an isocyanurate-forming catalyst, was added to the resultant, followed by adding a phosphoric acid when the yield reached 45% by mass to terminate the reaction. The reaction liquid was subjected to filtration, and then unreacted HDI and IPDI were removed therefrom using a thin film evaporator to obtain an isocyanurate-type polyisocyanate (hereinafter, may be referred to as "polyisocyanate P-2"). The NCO amount of the resultant polyisocyanate P-2 was 19.1% by mass, the number average molecular weight thereof was 1210, and the average number of isocyanate groups was 5.5. The resultant polyisocyanate P-2 was subjected to GPC analysis and $^1$H-NMR analysis to confirm the presence of an isocyanurate trimer.

<Preparation of blocked polyisocyanate composition >

[Example 1-1]

(Preparation of blocked polyisocyanate composition BL-a1)

100 parts by mass of the polyisocyanate P-1 obtained in Synthesis Example 1-1, 24 parts by mass (8% by mol, relative to 100% by mol of isocyanate groups) of methoxypolyethylene glycol (MPG-081, ethylene oxide repeating units: 15 units, manufactured by NIPPON NYUKAZAI CO., LTD.), 0.01 parts by mass 2-ethylhexyl acid phosphate (JP-508T, manufactured by JOHOKU CHEMICAL CO., LTD.), and 67% by mass of dipropylene glycol dimethyl ether (DPDM) were mixed in a four-necked flask equipped with a thermometer, a stirrer blade and a reflux cooling tube in a nitrogen flow, to allow the reaction to proceed at 115°C for 2 hours. The reaction liquid was cooled to 40°C, and then di-tert-butyl malonate was added thereto as a blocking agent in an amount of 1.1 mole equivalent per mole of isocyanate groups in the reactant. Then, 1.0 part by mass of a methanol solution containing 28% by mass of sodium methylate was added to the resultant and then stirred. The reaction liquid was stirred over 6 hours or more while maintaining the temperature in the inner bath at 50°C. After no absorption due to isocyanate groups was confirmed by infrared spectrum, DPDM was added thereto such that the amount of solid content became 60% by mass, and then the mixture was stirred and cooled to 40°C or lower. Then, ammonium polyoxyethylene polycyclic phenyl ether sulfate (ammonium salt of polyoxyethylene (oxyethylene repeating number n = 10 to 15) alkyl (the carbon number of an alkyl group = 1, 8, 9) (mono - penta) styryl phenyl ether sulfuric acid) (the surface tension at 25°C was 40.3 mM/m) was added to the reaction liquid as a dispersing agent such that the amount thereof, relative to 100 parts by mass of the amount of solid content in the blocked polyisocyanate, became 1.5 parts by mass, followed by conducting stirring for 30 minutes to obtain a blocked polyisocyanate composition BL-a1.

[Examples 1-2 to 1-11 and Comparative Examples 1-1 to 1-6]

(Preparation of blocked polyisocyanate compositions BL-a2 to BL-a1 1 and BL-b1 to BL-b6)

Blocked polyisocyanate compositions BL-a2 to BL-a11 and BL-b1 to BL-b6 were prepared by the same way as that of Example 1-1, except that the kind of the blocking agent, the amount of the hydrophilic compound, and the kind and the amount of the dispersing agent, as shown in Table 1, 2, or 4, were used.

[Example 1-12]

(Preparation of blocked polyisocyanate composition BL-a12)

Di-tert-butyl malonate was added to the polyisocyanate P-1 obtained in the Synthesis Example 1-1 in an amount of 1.1 mole equivalent per mol of isocyanate groups in the polyisocyanate in a four-necked flask equipped with a thermometer, a stirrer blade and a reflux cooling tube, in a nitrogen flow, followed by adding DPDM thereto such that the amount of solid content became 60% by mass. Then, 1.0 part by mass of a methanol solution containing 28% by mass of sodium methylate was added to the resultant and then stirred over 6 hours or more while maintaining the temperature in the inner bath at 50°C to confirm no absorption due to isocyanate groups by infrared spectrum. Then, the resultant was cooled to 40°C or lower, followed by adding ammonium polyoxyethylene alkyl ether sulfate (compound of the following general formula (II-1); hereinafter, may be referred to as "compound (II-1)") (the surface tension at 25°C was 30.7 mN/m) at room temperature to obtain a blocked polyisocyanate composition BL-a12.

$$R^{21}\text{-O-}(CH_2CH_2O)_{30}\text{-}SO_3NH_4 \qquad \text{(II-1)}$$

In the general formula (II-1), $R^{21}$ was a tridecyl group.

[Examples 1-13 to 1-14]

(Preparation of blocked polyisocyanate compositions BL-a13 to BL-a14)

Blocked polyisocyanate compositions BL-a13 to BL-a14 were prepared by the same way as that of Example 1-12, except that the kind of the blocking agent, the amount of the hydrophilic compound, and the kind and the amount of the dispersing agent, as shown in Table 3, were used.

[Examples 1-15 to 1-16]

(Preparation of blocked polyisocyanate compositions BL-a15 to BL-a16)

Blocked polyisocyanate compositions BL-a15 to BL-a16 were prepared by the same way as that of Example 1-1, except that the blocking agents B-1 and B-2 were used at a molar ratio B-1:B-2 of 50% by mol: 50% by mol in Example 1-15, and a molar ratio B-1:B-2 of 20% by mol: 80% by mol in Example 1-16, and the amount of the hydrophilic compound and the kind and the amount of the dispersing agent, as shown in Table 3, were used.

[Examples 1-17 to 1-18]

(Preparation of blocked polyisocyanate compositions BL-a17 to BL-a18)

Blocked polyisocyanate compositions BL-a17 to BL-a18 were prepared by the same way as that of Example 1-1, except that the polyisocyanate P-2 was used, the blocking agents B-1 and B-2 were used at a molar ratio B-1:B-2 of 50% by mol: 50% by mol in Example 1-17, and a molar ratio B-1:B-2 of 35% by mol: 65% by mol in Example 1-18, and the amount of the hydrophilic compound and the kind and the amount of the dispersing agent, as shown in Table 3, were used.

The blocked polyisocyanate compositions obtained in the Examples and Comparative Examples were evaluated by the above-mentioned methods. The results are shown in Tables 1 to 4.

The kind of the blocking agents and the dispersing agents in Tables 1 to 4 are shown below.

(Blocking agent)

B-1: Di-tert-butyl malonate
B-2: Diisopropyl malonate

(Dispersing agent)

D-1: Ammonium polyoxyethylene polycyclic phenyl ether sulfate (ammonium salt of polyoxyethylene (the oxyethylene repeating number n = 10 to 15) alkyl (the carbon number of alkyl group = 1, 8, 9) (mono - penta) styryl phenyl ether sulfuric acid) (the surface tension at 25°C was 40.3 mN/m)
D-2: Sodium polyoxyethylene polycyclic phenyl ether sulfate (sodium salt of polyoxyethylene (the oxyethylene repeating number n =10 to 15) alkyl (the carbon number of alkyl group = 1, 8, 9) (mono - penta) styryl phenyl ether sulfuric acid) (the surface tension at 25°C was 41.5 mN/m)
D-3: Ammonium polyoxyethylene alkylether sulfate (compound of the following general formula (II-2); hereinafter, may be referred to as "compound (II-2)") (the surface tension at 25°C was 40.4 mN/m)

$$R^{22}\text{-O-}(CH_2CH_2O)_8\text{-}SO_3NH_4 \qquad \text{(II-2)}$$

In the general formula (II-2), $R^{22}$ was a C12-13 alkyl group. The compound (II-2) was a mixture of one in which $R^{22}$ was a C12 alkyl group and one in which $R^{22}$ was a C13 alkyl group.
D-4: Polyoxyalkylene alkylether phosphoric acid ester (compound of the following general formula (II-3); hereinafter, may be referred to as "compound (II-3)") (the surface tension at 25°C was 30.7 mN/m)

$$R^{23}\text{-O-}(CH_2CH_2O)_2\text{-OPOOHONa} \qquad \text{(II-3)}$$

In the general formula (II-3), $R^{23}$ was a 2-ethylhexyl group.
D-5: Polyoxyethylene alkylether sulfuric acid ester salt (compound of the following general formula (II-4); hereinafter, may be referred to as "compound (II-4)") (the surface tension at 25°C was 52.1 mN/m).

$$R^{24}\text{-O-}(CH_2CH_2O)_{60}\text{-}SO_3Na \qquad \text{(II-4)}$$

In the general formula (II-4), $R^{24}$ was a C12-13 alkyl group. The compound (II-4) was a mixture of one in which $R^{24}$ was a C12 alkyl group and one in which $R^{24}$ was a C13 alkyl group.
D-6: Ammonium polyoxyethylene alkylether sulfate (the above-mentioned compound (II-1)) (the surface tension at 25°C was 38.8 mN/m)
D-7: Sodium polyoxyethylene alkylether sulfate (compound of the following general formula (II-5); hereinafter, may be referred to as "compound (II-5)") (the surface tension at 25°C was 45.9 mN/m)

$$R^{25}\text{-O-}(CH_2CH_2O)_{20}\text{-}SO_3Na \qquad \text{(II-5)}$$

In the general formula (II-5), $R^{25}$ was a C 12-13 alkyl group. The compound (II-5) was a mixture of one in which $R^{25}$ was a C 12 alkyl group and one in which $R^{25}$ was a C 13 alkyl group.
Regarding the storage stability, the ratio of the viscosity after storage relative to the viscosity at an initial stage could not be calculated in Table 4, because gelation or precipitation occurred.

Table 1

| | Ex. 1-1 | Ex. 1-2 | Ex. 1-3 | Ex. 1-4 | Ex. 1-5 | Ex. 1-6 |
|---|---|---|---|---|---|---|
| Blocked polyisocyanate composition | BL- a1 | BL- a2 | BL- a3 | BL- a4 | BL- a5 | BL- a6 |

(continued)

| | | | Ex. 1-1 | Ex. 1-2 | Ex. 1-3 | Ex. 1-4 | Ex. 1-5 | Ex. 1-6 |
|---|---|---|---|---|---|---|---|---|
| Constitution | Polyi socyanate | | P-1 | P-1 | P-1 | P-1 | P-1 | P-1 |
| | Blocking agent | | B-1 | B-1 | B-1 | B-1 | B-1 | B-1 |
| | Hydrophilic compound | Kind | MPG -081 | MPG -081 | MPG -081 | MPG -081 | MPG -081 | MPG -081 |
| | | Amount (% by mol) | 8 | 8 | 8 | 5 | 5 | 5 |
| | Dispersing agent | Kind | D-1 | D-2 | D-3 | D-1 | D-2 | D-3 |
| | | Surface tension (mN/m) | 40.3 | 41.5 | 40.4 | 40.3 | 41.5 | 40.1 |
| | | Amount (Parts by mass) | 1.5 | 1.5 | 1.5 | 1.5 | 1.5 | 1.5 |
| Physical property | Amount of solid content (% by mass) | | 60.0 | 60.1 | 60.2 | 60.3 | 60.3 | 60.2 |
| Evaluation | Storage stability (Viscosity ratio) | | 1.32 | 1.68 | 1.90 | 1.07 | 1.21 | 1.35 |
| | Curability at low temperature (Gel fraction: % by mass) | | 89.5 | 89.3 | 89.1 | 88.1 | 87.8 | 87.9 |
| (Ex.: Example) | | | | | | | | |

Table 2

| | | | Ex. 1-7 | Ex. 1-8 | Ex. 1-9 | Ex. 1-10 | Ex. 1-11 |
|---|---|---|---|---|---|---|---|
| Blocked polyisocyanate composition | | | BL-a7 | BL-a8 | BL-a9 | BL- a10 | BL- a11 |
| Constitution | Polyi socyanate | | P-1 | P-1 | P-1 | P-1 | P-1 |
| | Blocking agent | | B-1 | B-1 | B-1 | B-1 | B-2 |
| | Hydrophilic compound | Kind | MPG-081 | MPG-081 | MPG-081 | MPG-081 | MPG-081 |
| | | Amount (% by mol) | 2 | 2 | 2 | 2 | 5 |
| | Dispersing agent | Kind | D-1 | D-2 | D-3 | D-1 | D-1 |
| | | Surface tension (mN/m) | 40.3 | 41.5 | 40.4 | 40.3 | 40.3 |
| | | Amount (Parts by mass) | 1.5 | 1.5 | 1.5 | 0.5 | 0.5 |
| Physical property | Amount of solid content (% by mass) | | 60.1 | 60 | 60.2 | 60.2 | 60.1 |
| Evaluation | Storage stability (Viscosity ratio) | | 0.87 | 1.03 | 1.18 | 0.93 | 0.42 |
| | Curability at low temperature (Gel fraction: % by mass) | | 87.8 | 87.4 | 87.2 | 87.7 | 80.5 |
| (Ex.: Example) | | | | | | | |

Table 3

| | | | Ex. 1-12 | Ex. 1-13 | Ex. 1-14 | Ex. 1-15 | Ex. 1-16 | Ex. 1-17 | Ex. 1-18 |
|---|---|---|---|---|---|---|---|---|---|
| Blocked polyisocyanate composition | | | BL-a12 | BL-a13 | BL-a14 | BL- a15 | BL- a16 | BL- a17 | BL- a18 |
| Constitution | Polyi socyanate | | P-1 | P-1 | P-1 | P-1 | P-1 | P-2 | P-2 |
| | Blocking agent | | B-1 | B-1 | B-1 | B-1 /B-2 (50/ 50) | B-1 /B-2 (20/ 80) | B-1 /B-2 (501 50) | B-1 /B-2 (35/ 65) |
| | Hydrophilic compound | Kind | - | - | - | MPG -081 | MPG -081 | MPG -081 | MPG -081 |
| | | Amount (% by mol) | 0 | 0 | 0 | 2 | 2 | 2 | 2 |
| | Dispersing agent | Kind | D-6 | D-7 | D-6 | D-1 | D-1 | D-6 | D-6 |
| | | Surface tension (mN/m) | 38.8 | 45.9 | 38.8 | 40.3 | 40.3 | 38.8 | 38.8 |
| | | Amount (Parts by mass) | 0.2 | 0.3 | 0.15 | 0.3 | 0.3 | 0.35 | 0.35 |
| Physical property | Amount of solid content (% by mass) | | 60 | 60.1 | 60.1 | 60.1 | 60.1 | 60 | 60 |
| Evaluation | Storage stability (Viscosity ratio) | | 0.43 | 0.47 | 0.46 | 0.71 | 0.58 | 0.78 | 0.67 |
| | Curability at low temperature (Gel fraction: % by mass) | | 87.9 | 87.8 | 87.7 | 87.2 | 86.2 | 86.3 | 86 |
| (Ex.: Example) | | | | | | | | | |

Table 4

| | | | C.Ex. 1-1 | C.Ex. 1-2 | C.Ex. 1-3 | C.Ex. 1-4 | C.Ex. 1-5 | C.Ex. 1-6 |
|---|---|---|---|---|---|---|---|---|
| Blocked polyisocyanate composition | | | BL- b1 | BL- b2 | BL- b3 | BL- b4 | BL- b5 | BL- b6 |
| Constitution | Polyi socyanate | | P-1 | P-1 | P-1 | P-1 | P-1 | P-1 |
| | Blocking agent | | B-1 | B-1 | B-1 | B-1 | B-1 | B-2 |
| | Hydrophilic compound | Kind | MPG -081 | MPG -081 | MPG -081 | MPG -081 | MPG -081 | MPG -081 |
| | | Amount (% by mol) | 2 | 8 | 5 | 8 | 8 | 5 |
| | Dispersing agent | Kind | - | - | - | D-4 | D-5 | - |
| | | Surface tension (mN/m) | - | - | - | 30.7 | 52.1 | - |
| | | Amount (Parts by mass) | - | - | - | 1.5 | 1.5 | - |

(continued)

| | | C.Ex. 1-1 | C.Ex. 1-2 | C.Ex. 1-3 | C.Ex. 1-4 | C.Ex. 1-5 | C.Ex. 1-6 |
|---|---|---|---|---|---|---|---|
| Physical property | Amount of solid content (% by mass) | 60.1 | 60.3 | 60.2 | 60.1 | 60.3 | 60.2 |
| Evaluation | Storage stability (Viscosity ratio) | Gelated | Gelated | Gelated | Gelated | Gelated | Precipiated |
| | Curability at low temperature (Gel fraction: % by mass) | 88.2 | 89.7 | 88.4 | 88.2 | 88.1 | 79.9 |
| (C. Ex.: Comparative Example) | | | | | | | |

As shown in Tables 1 to 4, the blocked polyisocyanate compositions BL-a1 to BL-a18 (Examples 1-1 to 1-18) containing dispersing agents having the surface tension at 25°C of 38.8 mN/m to 45.9 mN/m exhibited both favorable storage stability when made into resin compositions, and favorable curability at a low temperature when made into resin films.

In the blocked polyisocyanate compositions BL-a1 to BL-a9 (Examples 1-1 to 1-9), in which the amounts of the hydrophilic compound were different from each other, the storage stability when made into resin compositions tended to be improved depending on the decrease in the amount of hydrophilic compound.

In contrast, the blocked polyisocyanate composition BL-b1 to BL-b6 (Comparative Example 1-1 to Comparative Example 1-6) containing dispersing agents having the surface tension at 25°C of 30.7 mN/m or 52.1 mN/m or free from any dispersing agents generated gelation or precipitation when made into resin compositions, and exhibited unfavorable storage stability.

«Examples 2-1 to 2-42 and Comparative Examples 2-1 to 2-12»

<Test items>

Each physical property of polyol was measured by the following methods. The amount of solid content in the blocked polyisocyanate composition and the surface tension at 25°C of the dispersing agent were measured as described in the above-mentioned "Examples 1-1 to 1-18 and Comparative Examples 1-1 to 1-6".
The resin compositions obtained in the examples and the comparative examples were evaluated as described below. The storage stability and the curability at a low temperature were evaluated as described in the above-mentioned "Examples 1-1 to 1-18 and Comparative Examples 1-1 to 1-6".

[Physical property 2-1]

(Glass transition temperature)

An organic solvent and the moisture content in a polyol solution was evaporated under reduced pressure, and then the resultant was subjected to vacuum drying, followed by measuring the glass transition temperature of the polyol using differential scanning calory (DSC) measurement device at a temperature increase rate of 5°C/minute.

[Physical property 2-2]

(Weight-average molecular weight)

The weight-average molecular weight of a polyol was determined by GPC measurement with reference to polystyrene standards using the following device. Each polyol used in the examples and comparative examples were used as each measurement sample. The measurement conditions are shown below.

(Measurement conditions)

Device: HLC-802A (manufactured by Tosoh Corporation)
Column: G1000HXL × 1 column, G2000HXL × 1 column, G3000HXL × 1 column (all of these were manufactured by Tosoh Corporation.)
Carrier: Tetrahydrofuran
Detection method: Differential refractometer

[Physical property 2-3]

(Hydroxy group value)

The hydroxy group value of a polyol was calculated after conducting measurement by potentiometer titration. The hydroxy group value is a value relative to the solid component in the polyol.

[Evaluation 2-1]

(Tensile strength)

The resultant resin composition was coated on a polypropylene (PP) plate such that the dried coating film thickness became 40 μm, followed by heating and drying at 80°C for 30 minutes to obtain a resin film. The result resin film was cut into a size of a width of 10 mm and a length of 40 mm, and then set such that the distance between chucks became 20 mm, followed by conducting tensile test at a speed of 20 mm/minute. The maximum point stress was measured at the time as the maximum stress value to determine the tensile strength.

<Synthesis of polyisocyanate>

[Synthesis Example 2-1] Synthesis of polyisocyanate P-1

An isocyanurate-type polyisocyanate (hereinafter, may be referred to as "polyisocyanate P-1") was obtained by the same method as described in the above-mentioned Synthesis Example 1-1.

<Preparation of blocked polyisocyanate composition>

[Example 2-1]

(Preparation of blocked polyisocyanate composition BL-a19)

100 parts by mass of polyisocyanate P-1 obtained in Synthesis Example 2-1, 21 parts by mass (7% by mol, relative to 100% by mol of isocyanate groups) of methoxypolyethylene glycol (MPC-081, ethylene oxide repeating units: 15 units, manufactured by NIPPON NYUKAZAI CO., LTD.), 0.01 parts by mass of 2-ethylhexyl acid phosphate (JP-508T, manufactured by JOHOKU CHEMICAL CO., LTD.), and 67 parts by mass of dipropylene glycol dimethyl ether (DPDM) were mixed in a four-necked flask equipped with a thermometer, a stirrer blade and a reflux cooling tube in a nitrogen flow, to allow the reaction to proceed at 115°C for 2 hours. The reaction liquid was cooled to 40°C, and then di-tert-butyl malonate was added thereto as a blocking agent in an amount of 1.1 mole equivalent per mole of isocyanate groups in the reactant. Then, 1.0 part by mass of a methanol solution containing 28% by mass of sodium methylate was added to the resultant and then stirred. The reaction liquid was stirred over 6 hours or more while maintaining the temperature in the inner bath at 50°C. After no absorption due to isocyanate groups was confirmed by infrared spectrum, DPDM was added thereto such that the amount of solid content became 60% by mass, and then the mixture was stirred and cooled to 40°C or lower. Then, ammonium polyoxyethylene polycyclic phenyl ether sulfate (ammonium salt of polyoxyethylene (oxyethylene repeating number n = 10 to 15) alkyl (the carbon number of an alkyl group = 1, 8, 9) (mono - penta) styryl phenyl ether sulfuric acid) (the surface tension at 25°C was 40.3 mM/m) was added to the reaction liquid as a dispersing agent such that the amount thereof, relative to 100 parts by mass of the amount of solid content in the blocked polyisocyanate, became 1.3 parts by mass, followed by conducting stirring for 30 minutes to obtain a blocked polyisocyanate composition BL-a19.

[Examples 2-2 to 2-11, 2-15 to 2-17 and Comparative Examples 2-1 to 2-6]

(Preparation of blocked polyisocyanate compositions BL-a20 to BL-a29, BL-a33 to BL-a35 and BL-b7 to BL-b12)

Blocked polyisocyanate compositions BL-a20 to BL-a29, BL-a33 to BL-a35 and BL-b7 to BL-b12 were prepared by the same way as that of Example 2-1, except that the kind of the blocking agent, the amount of the hydrophilic compound, and the kind and the amount of the dispersing agent, as shown in Tables 5 to 8, were used.

[Example 2-12]

(Preparation of blocked polyisocyanate composition BL-a30)

Di-tert-butyl malonate was added to the polyisocyanate P-1 obtained in the Synthesis Example 2-1 in an amount of 1.1 mole equivalent per mole of isocyanate groups in the polyisocyanate in a four-necked flask equipped with a thermometer, a stirrer blade and a reflux cooling tube, in a nitrogen flow, followed by adding DPDM thereto such that the amount of solid content became 60% by mass. Then, 1.0 part by mass of a methanol solution containing 28% by mass of sodium methylate was added to the resultant and then stirred over 6 hours or more while maintaining the temperature in the inner bath at 50°C to confirm no absorption due to isocyanate groups by infrared spectrum. Then, the reaction liquid was cooled to 40°C or lower, followed by adding ammonium polyoxyethylene alkyl ether sulfate (compound (II-1)) (the surface tension at 25°C was 30.7 mN/m) at room temperature to obtain a blocked polyisocyanate composition BL-a30.

[Examples 2-13 and 2-14]

(Preparation of blocked polyisocyanate compositions BL-a31 and BL-a32)

Blocked polyisocyanate compositions BL-a31 and BL-a32 were prepared by the same way as that of Example 2-12, except that the kind of the blocking agent, the amount of the hydrophilic compound, and the kind and the amount of the dispersing agent, as shown in Table 6, were used.

The kind of the blocking agent and dispersing agent in Tables 5 to 8 were the same as those in the above-mentioned "Examples 1-1 to 1-18 and Comparative Examples 1-1 to 1-6".

Table 5

| | | | Ex. 2-1 | Ex. 2-2 | Ex. 2-3 | Ex. 2-4 | Ex. 2-5 | Ex. 2-6 | Ex. 2-7 |
|---|---|---|---|---|---|---|---|---|---|
| Blocked polyisocyanate composition | | | BL-a19 | BL-a20 | BL-a21 | BL-a22 | BL-a23 | BL-a24 | BL-a25 |
| Constitution | Polyi socyanate | | P-1 | P-1 | P-1 | P-1 | P-1 | P-1 | P-1 |
| | Blocking agent | | B-1 | B-1 | B-1 | B-1 | B-1 | B-1 | B-1 |
| | Hydrophilic compound | Kind | MPG -081 | MPG -081 | MPG -081 | MPG -081 | MPG -081 | MPG -081 | MPG -081 |
| | | Amount (% by mol) | 7 | 7 | 7 | 4 | 4 | 4 | 1.5 |
| | Dispersing agent | Kind | D-1 | D-2 | D-3 | D-1 | D-2 | D-3 | D-1 |
| | | Surface tension (mN/m) | 40.3 | 41.5 | 40.4 | 40.3 | 41.5 | 40.4 | 40.3 |
| | | Amount (Parts by mass) | 1.3 | 1.3 | 1.3 | 1.4 | 1.4 | 1.4 | 1.3 |
| Physical property | Amount of solid content (% by mass) | | 60.1 | 60.2 | 60.1 | 60.2 | 60.2 | 60.1 | 59.9 |
| (Ex.: Example) | | | | | | | | | |

Table 6

| | | | Ex. 2-8 | Ex. 2-9 | Ex. 2-10 | Ex. 2-11 | Ex. 2-12 | Ex. 2-13 | Ex. 2-14 |
|---|---|---|---|---|---|---|---|---|---|
| Blocked polyisocyanate composition | | | BL-a26 | BL-a27 | BL-a28 | BL-a29 | BL-a30 | BL-a31 | BL-a32 |
| Constitution | Polyi socyanate | | P-1 | P-1 | P-1 | P-1 | P-1 | P-1 | P-1 |
| | Blocking agent | | B-1 | B-1 | B-1 | B-2 | B-1 | B-1 | B-1 |
| | Hydrophilic compound | Kind | MPG -081 | MPG -081 | MPG -081 | MPG -081 | - | - | - |
| | | Amount (% by mol) | 1.5 | 1.5 | 1.5 | 4.5 | 0 | 0 | 0 |
| | Dispersing agent | Kind | D-2 | D-3 | D-1 | D-1 | D-6 | D-7 | D-6 |
| | | Surface tension (mN/m) | 41.5 | 40.4 | 40.3 | 40.3 | 38.8 | 45.9 | 38.8 |
| | | Amount (Parts by mass) | 1.3 | 1.3 | 0.45 | 0.45 | 0.18 | 0.28 | 0.16 |
| Physical property | Amount of solid content (% by mass) | | 60.1 | 60.1 | 60.1 | 60.0 | 60.0 | 59.9 | 60.2 |
| (Ex.: Example) | | | | | | | | | |

Table 7

| | | | Ex. 2-15 | Ex. 2-16 | Ex. 2-17 |
|---|---|---|---|---|---|
| Blocked polyisocyanate composition | | | BL-a33 | BL-a34 | BL-a35 |
| Constitution | Polyisocyanate | | P-1 | P-1 | P-1 |
| | Blocking agent | | B-1 | B-1 | B-1 |
| | Hydrophilic compound | Kind | MPG-081 | MPG-081 | MPG-081 |
| | | Amount (% by mol) | 3 | 3 | 3 |
| | Dispersing agent | Kind | D-1 | D-2 | D-3 |
| | | Surface tension (mN/m) | 40.3 | 41.5 | 40.4 |
| | | Amount (Parts by mass) | 1.5 | 1.5 | 1.5 |
| Physical property | Amount of solid content (% by mass) | | 60.2 | 60.2 | 60.1 |
| (Ex.: Example) | | | | | |

Table 8

| | C.Ex. 2-1 | C.Ex. 2-2 | C.Ex. 2-3 | C.Ex. 2-4 | C.Ex. 2-5 | C.Ex. 2-6 |
|---|---|---|---|---|---|---|
| Blocked polyisocyanate composition | BL-b7 | BL-b8 | BL-b9 | BL-b10 | BL-b11 | BL-b12 |

(continued)

| | | | C.Ex. 2-1 | C.Ex. 2-2 | C.Ex. 2-3 | C.Ex. 2-4 | C.Ex. 2-5 | C.Ex. 2-6 |
|---|---|---|---|---|---|---|---|---|
| Constitution | Polyisocyanate | | P-1 | P-1 | P-1 | P-1 | P-1 | P-1 |
| | Blocking agent | | B-1 | B-1 | B-1 | B-1 | B-1 | B-2 |
| | Hydrophilic compound | Kind | MPG-081 | MPG-081 | MPG-081 | MPG-081 | MPG-081 | MPG-081 |
| | | Amount (% by mol) | 1.5 | 7 | 4 | 7 | 7 | 4.5 |
| | Dispersing agent | Kind | - | - | - | D-4 | D-5 | - |
| | | Surface tension (mN/m) | - | - | - | 30.7 | 52.1 | - |
| | | Amount (Parts by mass) | - | - | - | 1.5 | 1.5 | - |
| Physical property | Amount of solid amount (% by mass) | | 59.9 | 60.2 | 60.1 | 59.9 | 60.2 | 60.1 |
| (C.Ex.: Comparative Example) | | | | | | | | |

<Preparation of polyol >

[Preparation Example 2-1]

(Preparation of polyol OHP 1)

33 parts by mass of propylene glycol monomethyl ether was charged into a four-necked flask equipped with a stirrer, a thermometer, a cooling tube and a nitrogen gas inlet tube, and then the temperature therein was raised to 110°C in a nitrogen gas flow. When the temperature reached 110°C, the nitrogen gas flow was stopped, and then a mixture composed of 25.1 parts by mass of 2-hydroxyethyl methacrylate, 40.9 parts by mass of methyl methacrylate, 25.7 parts by mass of butyl acrylate, 7.0 parts by mass of styrene, 1.3 parts by mass of acrylic acid, and 5.0 parts by mass of 2,2'-azobis(isobutyronitrile) was added dropwise over 5 hours. Then, the resultant was stirred for 3 hours while flowing a nitrogen gas at 115°C, followed by cooling the resultant to 60°C, and then adding propylene glycol monomethyl ether thereto to obtain a solution of polyol OHP 1, that was an acrylic polyol-based resin, in which the amount of solid content was 60% by mass. The weight-average molecular weight Mw of the polyol OHP 1 was $1.21\times10^4$, and the hydroxy group value was 109 mg KOH/g.

[Preparation Example 2-2]

(Preparation of polyol OHP 2)

29 parts by mass of propylene glycol monomethyl ether was charged into a four-necked flask equipped with a stirrer, a thermometer, a cooling tube and a nitrogen gas inlet tube, and then the temperature therein was raised to 110°C in a nitrogen gas flow. When the temperature reached 110°C, the nitrogen gas flow was stopped, and then a mixture composed of 22.3 parts by mass of 2-hydroxyethyl methacrylate, 8.0 parts by mass of methyl methacrylate, 26.1 parts by mass of butyl acrylate, 42.3 parts by mass of styrene, 1.3 parts by mass of acrylic acid, and 2 parts by mass of 2,2'-azobis(isobutyronitrile) was added dropwise over 5 hours. Then, the resultant was stirred for 3 hours while flowing a nitrogen gas at 115°C, followed by cooling the resultant to 60°C, and then adding propylene glycol monomethyl ether thereto to obtain a solution of polyol OHP 2, that was an acrylic polyol-based resin, in which the amount of solid content was 60% by mass. The weight-average molecular weight Mw of the polyol OHP 2 was $2.62\times10^4$, and the hydroxy group value was 139 mg KOH/g.

[Preparation Example 2-3]

(Preparation of polyol OHP 3)

25 parts by mass of propylene glycol monomethyl ether was charged into a four-necked flask equipped with a stirrer, a thermometer, a cooling tube and a nitrogen gas inlet tube, and then the temperature therein was raised to 110°C in a nitrogen gas flow. When the temperature reached 110°C, the nitrogen gas flow was stopped, and then a mixture composed of 15.2 parts by mass of 2-hydroxyethyl methacrylate, 18.0 parts by mass of 2-ethylhexyl acrylate, 58.3 parts by mass of methyl methacrylate, 7.0 parts by mass of styrene, 1.50 parts by mass of acrylic acid, and 1.5 parts by mass of 2,2'-azobis(isobutyronitrile) was added dropwise over 5 hours. Then, the resultant was stirred for 3 hours while flowing a nitrogen gas at 115°C, followed by cooling the resultant to 60°C, and then adding propylene glycol monomethyl ether thereto to obtain a solution of polyol OHP 3, that was an acrylic polyol-based resin, in which the amount of solid content was 60% by mass. The weight-average molecular weight Mw of the polyol OHP 3 was $3.52\times10^4$, and the hydroxy group value was 66 mg KOH/g.

[Preparation Example 2-4]

(Preparation of polyol OHP 4)

45 parts by mass of propylene glycol monomethyl ether was charged into a four-necked flask equipped with a stirrer, a thermometer, a cooling tube and a nitrogen gas inlet tube, and then the temperature therein was raised to 115°C in a nitrogen gas flow. When the temperature reached 115°C, the nitrogen gas flow was stopped, and then a mixture composed of 28.2 parts by mass of 2-hydroxyethyl methacrylate, 31.5 parts by mass of methyl methacrylate, 32.0 parts by mass of butyl acrylate, 7.0 parts by mass of styrene, 1.3 parts by mass of acrylic acid, and 8 parts by mass of 2,2'-azobis(isobutyronitrile) was added dropwise over 5 hours. Then, the resultant was stirred for 3 hours while flowing a nitrogen gas at 115°C, followed by cooling the resultant to 60°C, and then adding propylene glycol monomethyl ether thereto to obtain a solution of polyol OHP 4, that was an acrylic polyol-based resin, in which the amount of solid content was 60% by mass. The weight-average molecular weight Mw of the polyol OHP 4 was $7.20\times10^3$, and the hydroxy group value was 150 mg KOH/g.

<Preparation of resin composition>

[Examples 2-18 to 2-42 and Comparative Examples 2-7 to 2-12]

(Preparation of resin compositions S-a1 to S-a25 and S-b1 to S-b6)

A solution obtained by evaporating each of the polyol solution using an evaporator till the amount of solid content became 70% by mass, and each blocked polyisocyanate composition obtained in the example or comparative example were mixed such that the molar ratio of isocyanate groups to hydroxyl groups (isocyanate group / hydroxyl group) became 1, and then an ion exchanged water was added thereto such that the amount of solid content became 40% by mass to obtain each resin composition. In the resin compositions S-a21 and S-a22 (Examples 2-38 and 2-39), the blocked polyisocyanate compositions BL-a9 and BL-a10 obtained in Example 1-9 and Example 1-10 were used, respectively.
The kind of polyols in Tables 9 to 13 are shown below.

(Polyol)

OHP 1: The glass transition temperature Tg was 27.2°C, the weight-average molecular weight MW was $1.21\times10^4$, and the hydroxy group value was 109 mg KOH/g (in solid component).
OHP 2: The glass transition temperature Tg was 29.3°C, the weight-average molecular weight Mw was $2.62\times10^4$, and the hydroxy group value was 139 mg KOH/g (in solid component).
OHP 3: The glass transition temperature Tg was 44.5°C, the weight-average molecular weight Mw was $3.52\times10^4$, and the hydroxy group value was 66 mg KOH/g (in solid component).
OHP 4: The glass transition temperature Tg was 15.2°C, the weight-average molecular weight Mw was $7.20\times10^3$, and the hydroxy group value was 150 mg KOH/g (in solid component).
The resin compositions obtained in the examples and comparative examples were evaluated by the above-mentioned methods. Results are shown in Tables 9 to 13. In Tables 9 to 13, the amount of the blocked polyisocyanate composition is indicated as the amount of solid content (parts by mass) in the blocked polyisocyanate composition, relative to 100 parts by mass of the polyol. In Table 13, regarding storage stability, the ratio of the viscosity after storage

relative to the viscosity at an initial stage could not be calculated because gelation or precipitation occurred.

Table 9

| | | | Ex. 2-18 | Ex. 2-19 | Ex. 2-20 | Ex. 2-21 | Ex. 2-22 | Ex. 2-23 | Ex. 2-24 |
|---|---|---|---|---|---|---|---|---|---|
| Resin composition | | | S-a1 | S-a2 | S-a3 | S-a4 | S-a5 | S-a6 | S-a7 |
| Constitution | Blocked polyisocyanate composition | Kind | BL-a19 | BL-a20 | BL-a21 | BL-a22 | BL-a23 | BL-a24 | BL-a25 |
| | | Amount (Parts by mass) | 101 | 101 | 101 | 95 | 95 | 95 | 90 |
| | Polyol | Kind | OHP 1 | OHP 1 | OHP 1 | OHP 1 | OHP 1 | OHP 1 | OHP 1 |
| | | Tg | 27.2 | 27.2 | 27.2 | 27.2 | 27.2 | 27.2 | 27.2 |
| | | Mw | 1.21 ×10 4 | 1.21 ×10 4 | 1.21 ×10 4 | 1.21 ×10 4 | 1.21 ×10 4 | 1.21 ×10 4 | 1.21 ×10 4 |
| | | Hydroxy group value (mgKOH/g) | 109 | 109 | 109 | 109 | 109 | 109 | 109 |
| | | Amount (Parts by mass) | 100 | 100 | 100 | 100 | 100 | 100 | 100 |
| Evaluation | Storage stability (Viscosity ratio) | | 1.22 | 1.57 | 1.78 | 1.01 | 1.13 | 1.29 | 0.81 |
| | Curability at low temperature (Gel fraction: % by mass) | | 89.2 | 88.8 | 88.6 | 87.9 | 87.4 | 87.6 | 87.5 |
| | Tensile strength (MPa) | | 15.7 | 15.6 | 15.4 | 17.9 | 17.7 | 17.8 | 20.8 |
| (Ex.: Example) | | | | | | | | | |

Table 10

| | | | Ex. 2-25 | Ex. 2-26 | Ex. 2-27 | Ex. 2-28 | Ex. 2-29 | Ex. 2-30 | Ex. 2-31 |
|---|---|---|---|---|---|---|---|---|---|
| Resin composition | | | S-a8 | S-a9 | S-a10 | S-a11 | S-a12 | S-a13 | S-a14 |
| Constitution | Blocked polyisocyanate composition | Kind | BL-a26 | BL-a27 | BL-a28 | BL-a29 | BL-a30 | BL-a31 | BL-a32 |
| | | Amount (Parts by mass) | 90 | 90 | 90 | 96 | 87 | 87 | 87 |
| | Polyol | Kind | OHP 1 | OHP 1 | OHP 1 | OHP 1 | OHP 1 | OHP 1 | OHP 1 |
| | | Tg | 27.2 | 27.2 | 27.2 | 27.2 | 27.2 | 27.2 | 27.2 |
| | | Mw | $1.21 \times 10^4$ | $1.21 \times 10^4$ | $1.21 \times 10^4$ | $1.21 \times 10^4$ | $1.21 \times 10^4$ | $1.21 \times 10^4$ | $1.21 \times 10^4$ |
| | | Hydroxy group value (mgKOH/g) | 109 | 109 | 109 | 109 | 109 | 109 | 109 |
| | | Amount (Parts by mass) | 100 | 100 | 100 | 100 | 100 | 100 | 100 |

(continued)

| | | Ex. 2-25 | Ex. 2-26 | Ex. 2-27 | Ex. 2-28 | Ex. 2-29 | Ex. 2-30 | Ex. 2-31 |
|---|---|---|---|---|---|---|---|---|
| Evaluation | Storage stability (Viscosity ratio) | 0.83 | 0.85 | 0.87 | 0.41 | 0.45 | 0.49 | 0.44 |
| | Curability at low temperature (Gel fraction: % by mass) | 87.2 | 86.9 | 87.4 | 81.2 | 88.0 | 87.5 | 87.8 |
| | Tensile strength (MPa) | 20.5 | 20.2 | 20.7 | 8.9 | 21.2 | 20.8 | 21.5 |
| (Ex.: Example) | | | | | | | | |

Table 11

| | | | Ex. 2-32 | Ex. 2-33 | Ex. 2-34 | Ex. 2-35 | Ex. 2-36 | Ex. 2-37 |
|---|---|---|---|---|---|---|---|---|
| Resin composition | | | S-a15 | S-a16 | S-a17 | S-a18 | S-a19 | S-a20 |
| Constitution | Blocked polyisocyanate composition | Kind | BL-a22 | BL-a23 | BL-a24 | BL-a33 | BL-a34 | BL-a35 |
| | | Amount (Parts by mass) | 128 | 128 | 128 | 57 | 57 | 57 |
| | Polyol | Kind | OHP 2 | OHP 2 | OHP 2 | OHP 3 | OHP 3 | OHP 3 |
| | | Tg | 29.3 | 29.3 | 29.3 | 44.5 | 44.5 | 44.5 |
| | | Mw | $2.62 \times 10^4$ | $2.62 \times 10^4$ | $2.62 \times 10^4$ | $3.52 \times 10^4$ | $3.52 \times 10^4$ | $3.52 \times 10^4$ |
| | | Hydroxy group value (mgKOH/g) | 139 | 139 | 139 | 66 | 66 | 66 |
| | | Amount (Parts by mass) | 100 | 100 | 100 | 100 | 100 | 100 |
| Evaluation | Storage stability (Viscosity ratio) | | 1.15 | 1.25 | 1.43 | 1.18 | 1.29 | 1.48 |
| | Curability at low temperature (Gel fraction: % by mass) | | 89.6 | 89.8 | 89.9 | 90.1 | 90.2 | 90.3 |
| | Tensile strength (MPa) | | 19.2 | 19.0 | 18.8 | 23.3 | 23.2 | 23.5 |
| (Ex.: Example) | | | | | | | | |

Table 12

| | Ex. 2-38 | Ex. 2-39 | Ex. 2-40 | Ex. 2-41 | Ex. 2-42 |
|---|---|---|---|---|---|
| Resin composition | S-a21 | S-a22 | S-a23 | S-a24 | S-a25 |

(continued)

| | | | Ex. 2-38 | Ex. 2-39 | Ex. 2-40 | Ex. 2-41 | Ex. 2-42 |
|---|---|---|---|---|---|---|---|
| Constitution | Blocked polyisocyanate composition | Kind | BL-a9 | BL-a10 | BL-a26 | BL-a27 | BL-a28 |
| | | Amount (Parts by mass) | 125 | 125 | 54 | 54 | 54 |
| | Polyol | Kind | OHP 4 | OHP 4 | OHP 3 | OHP 3 | OHP 3 |
| | | Tg | 15.2 | 15.2 | 44.5 | 44.5 | 44.5 |
| | | Mw | $7.20 \times 10^4$ | $7.20 \times 10^4$ | $3.52 \times 10^4$ | $3.52 \times 10^4$ | $3.52 \times 10^4$ |
| | | Hydroxy group value (mgKO H/g) | 150 | 150 | 66 | 66 | 66 |
| | | Amount (Parts by mass) | 100 | 100 | 100 | 100 | 100 |
| Evaluation | Storage stability (Viscosity ratio) | | 1.08 | 0.85 | 1.23 | 1.34 | 1.53 |
| | Curability at low temperature (Gel fraction: % by mass) | | 86.5 | 86.7 | 90.7 | 90.9 | 91.2 |
| | Tensile strength (MPa) | | 17.7 | 17.8 | 23.7 | 23.9 | 24.1 |
| (Ex.: Example) | | | | | | | |

Table 13

| | | | C.Ex 2-7 | C.Ex 2-8 | C.Ex 2-9 | C.Ex 2-10 | C.Ex 2-11 | C.Ex 2-12 |
|---|---|---|---|---|---|---|---|---|
| Resin composition | | | S-b1 | S-b2 | S-b3 | S-b4 | S-b5 | S-b6 |
| Constitution | Blocked polyisocyanate composition | Kind | BL-b7 | BL-b8 | BL-b9 | BL-b10 | BL-b11 | BL-b12 |
| | | Amount (Parts by mass) | 91 | 103 | 97 | 103 | 103 | 97 |
| | Polyol | Kind | OHP 1 | OHP 1 | OHP 1 | OHP 1 | OHP 1 | OHP 1 |
| | | Tg | 27.2 | 27.2 | 27.2 | 27.2 | 27.2 | 27.2 |
| | | Mw | $1.21 \times 10^4$ | $1.21 \times 10^4$ | $1.21 \times 10^4$ | $1.21 \times 10^4$ | $1.21 \times 10^4$ | $1.21 \times 10^4$ |
| | | Hydroxy group value (mgKO H/g) | 109 | 109 | 109 | 109 | 109 | 109 |
| | | Amount (Parts by mass) | 100 | 100 | 100 | 100 | 100 | 100 |
| Evaluation | Storage stability (Viscosity ratio) | | Gelat-ed | Gelat-ed | Gelat-ed | Gelat-ed | Gelat-ed | Precipitated |
| | Curability at low temperature (Gel fraction: % by mass) | | 82.5 | 84.5 | 83.2 | 80.5 | 80.8 | 78.8 |
| | Tensile strength (MPa) | | 11.2 | 8.3 | 9.8 | 7.2 | 7.9 | 6.6 |
| (C.Ex: Comparative Example) | | | | | | | | |

As shown in Tables 9 to 13, the resin compositions S-a1 to S-a25 (Examples 2-18 to 2-42) exhibited favorable storage stability, and favorable curability at a low temperature and favorable tensile strength when made into resin films.

Form the comparison of the resin compositions S-a4 to S-a6 and S-a15 to S-a17 (Examples 2-21 to 2-23 and 2-32 to 2-34), and comparison of the resin compositions S-a8 to S-a9 and S-a23 to S-a24 (Examples 2-25 to 2-27 and 2-40 to 2-42), in which the kinds of polyol were different from each other, the storage stability tended to be improved depending on the decrease in the glass transition temperature Tg and the weight-average molecular weight of the polyol, whilst the curability at a low temperature and the tensile strength when made into a resin film tended to be improved depending on the increase in the glass transition temperature Tg and the weight-average molecular weight of the polyol.

In contrast, the resin composition S-b1 to S-b6 (Comparative Example 2-7 to Comparative Example 2-12) generated gelation or precipitation when made into resin compositions, and exhibited unfavorable storage stability.

(Blocking agent)

B-3: 1,2,3-triazole
B-4: 1,2,4-triazole

(Solvent)

DMF: N,N-dimethyl formamide

(Carboxylate salt)

C: Potassium acetate

(Urethane-forming catalyst)

LH-10: Aqueous emulsion containing 10% by mass of dibutyltin dilaurate (DBTDL), relative to the total mass of the emulsion (manufactured by Borchers Inc., under the trade name of "LH-10")

[Physical property 3-1]

Effective NCO amount (% by mass) = [(Solid component of blocked polyisocyanate composition (% by mass)) × {(mass of polyisocyanate used in blocking reaction)×NCO%}] / (mass of blocked polyisocyanate composition after blocking reaction)

[Physical property 3-2]

(Amount of counter cation in carboxylate salt)

The amount of counter cation in carboxylate salt contained in a blocked polyisocyanate composition was measured by the following method.

An ultrapure water was added to a sample and then mixed, followed by leaving the mixture still for several hours. Then, an aqueous layer was subjected to filtration through a filter, and then measurement by ion chromatography to determine the amount of counter cation in carboxylate salt. The measurement conditions are shown below.

(Measurement conditions)

| | |
|---|---|
| Device: | Ion chromatography manufactured by Shimadzu Corporation. |
| Column: | Shim-pack-IC-C4 4.6 mm I.D. × 150 mm L, 7 μm (manufactured by Shimadzu Corporation) |
| Mobile phase: | A) 3.5 mmol/L oxalic acid |
| | B) 1 mmol/L 18-crown-6 |
| Flow rate: | 1.0 mL/min |
| Sample concentration: | 1.0% by mass |

(continued)

| | |
|---|---|
| Injection amount: | 50 μL |
| Temperature: | 45°C |
| Detection: | CDD |

[Preparation Example 3-1]

<Preparation of blocked polyisocyanate composition>

(Preparation of blocked polyisocyanate composition BL-a36)

100 parts by mass of polyisocyanate P-1 obtained in Synthesis Example 1-1, and 15.0 parts by mass (5% by mol, relative to the NCO% of the polyisocyanate P-1) of methoxypolyethylene glycol (MPC-081, ethylene oxide repeating units: 15 units, manufactured by NIPPON NYUKAZAI CO., LTD.) were charged in a four-necked flask equipped with a stirrer, a thermometer, a reflux cooling tube and a nitrogen gas inlet tube under nitrogen atmosphere, followed by heating and stirring the mixture at 120°C for 2 hours. Then, the reaction liquid was cooled to a temperature of approximately 80°C to 110°C, and then 30.8 parts by mass of 1,2,3-triazole was added thereto gradually, followed by stirring the mixture at a temperature of 80°C or more but less than 120°C for approximately 1 hour to 4 hours to allow the reaction to proceed. Then, it was confirmed by FT-IR spectrum measurement that isocyanate groups were blocked. Then, N,N-dimethylformamide was added to the reaction liquid such that the amount of solid content became 60%, and then stirred at 60°C until the resultant became uniform. Then, the resultant was cooled to 30°C, and then the dispersing agent D-1 (ammonium polyoxyethylene polycyclic phenyl ether sulfate (ammonium salt of polyoxyethylene (oxyethylene repeating number n = 10 to 15) alkyl (the carbon number of an alkyl group = 1, 8, 9) (mono - penta) styryl phenyl ether sulfuric acid) (the surface tension at 25°C was 40.3 mM/m)) was added to the reaction liquid such that that the amount thereof, relative to 100 parts by mass of the amount of solid content in the blocked polyisocyanate, became 1.5 parts by mass, followed by further stirring the mixture for 30 minutes to obtain a blocked polyisocyanate composition BL-a36.

[Preparation Example 3-2]

<Preparation of blocked polyisocyanate composition>

(Preparation of blocked polyisocyanate composition BL-a37)

A blocked polyisocyanate composition BL-a37 was obtained by the same method as that in Preparation Example 3-1, except that a dispersing agent D-2 (sodium polyoxyethylene polycyclic phenyl ether sulfate (sodium salt of polyoxyethylene (oxyethylene repeating number n = 10 to 15) alkyl (the carbon number of an alkyl group = 1, 8, 9) (mono - penta) styryl phenyl ether sulfuric acid) (the surface tension at 25°C was 41.5 mN/m)) was used.

[Preparation Example 3-3]

<Preparation of blocked polyisocyanate composition>

(Preparation of blocked polyisocyanate composition BL-a38)

A blocked polyisocyanate composition BL-a38 was obtained by the same method as that in Preparation Example 3-1, except that a dispersing agent D-3 (ammonium polyoxyethylene alkyl ether sulfate (compound (II-2)) (the surface tension at 25°C was 40.4 mN/m)) was used.

[Preparation Example 3-4]

(Preparation of blocked polyisocyanate composition BL-a39)

100 parts by mass of polyisocyanate P-1 obtained in Synthesis Example 1-1, and 15.0 parts by mass of methoxypolyethylene glycol (MPC-081, ethylene oxide repeating units: 15 units, manufactured by NIPPON NYUKAZAI CO., LTD.) were charged in a four-necked flask equipped with a stirrer, a thermometer, a reflux cooling tube and a nitrogen gas inlet tube under nitrogen atmosphere, followed by heating and stirring the mixture at 120°C for 2 hours.

Then, the reaction liquid was cooled to a temperature of approximately 80°C to 110°C, and then 30.8 parts by mass of 1,2,4-triazole was added thereto gradually, followed by stirring the mixture at a temperature of 80°C or more but less than 120°C for approximately 1 hour to 4 hours to allow the reaction to proceed. Then, it was confirmed by FT-IR spectrum measurement that isocyanate groups were blocked. Then, N,N-dimethylformamide was added to the reaction liquid such that the amount of solid content became 60% by mass, and then the mixture was stirred at 60°C until the resultant became uniform. Then, the resultant was cooled to 30°C, and then the dispersing agent D-1 (ammonium polyoxyethylene polycyclic phenyl ether sulfate (ammonium salt of polyoxyethylene (oxyethylene repeating number n = 10 to 15) alkyl (the carbon number of an alkyl group = 1, 8, 9) (mono - penta) styryl phenyl ether sulfuric acid) (the surface tension at 25°C was 40.3 mM/m)) was added to the reaction liquid such that that the amount thereof, relative to 100 parts by mass of the amount of solid content in the blocked polyisocyanate, became 1.5 parts by mass, followed by further stirring the mixture for 30 minutes to obtain a blocked polyisocyanate composition BL-a39.

[Preparation Example 3-5]

<Preparation of blocked polyisocyanate composition>

(Preparation of blocked polyisocyanate composition BL-a40)

A blocked polyisocyanate composition BL-a40 was obtained by the same method as that in Preparation Example 3-4, except that the dispersing agent D-2 (sodium polyoxyethylene polycyclic phenyl ether sulfate (sodium salt of polyoxyethylene (oxyethylene repeating number n = 10 to 15) alkyl (the carbon number of an alkyl group = 1, 8, 9) (mono - penta) styryl phenyl ether sulfuric acid) (the surface tension at 25°C was 41.5 mN/m)) was used.

[Preparation Example 3-6]

<Preparation of blocked polyisocyanate composition>

(Preparation of blocked polyisocyanate composition BL-a41)

A blocked polyisocyanate composition BL-a41 was obtained by the same method as that in Preparation Example 3-4, except that the dispersing agent D-3 (ammonium polyoxyethylene alkyl ether sulfate (compound (II-2)) (the surface tension at 25°C was 40.4 mN/m)) was used.

[Preparation Example 3-7]

<Preparation of blocked polyisocyanate composition>

(Preparation of blocked polyisocyanate composition BL-a42)

A blocked polyisocyanate composition BL-a42 was obtained by the same method as that in Preparation Example 3-6, except that the dispersing agent D-3 was added such that the amount thereof, relative to 100 parts by mass of the amount of solid content in the blocked polyisocyanate, became 0.5 parts by mass.

<Preparation of resin composition>

[Example 3-1]

10.0 parts by mass (solution mass) of a water-based acrylic polyol (manufactured by Nuplex, Setaqua (registered trademarks) 6515 (trade name), OH (%) (on solids) = 3.3, Acid value (mg KOH/g) = 9.9, resin component 45%) and 4.08 parts by mass (solution mass) (such that the molar ratio of isocyanate groups relative to hydroxyl groups (isocyanate groups / hydroxyl groups) became 0.80) of the blocked polyisocyanate BL-a36 were mixed. Then, 0.14 parts by mass (0.80% by mass, relative to the total mass of resin solid contents) of potassium acetate, and 0.14 parts by mass (solution mass, 0.80% by mass, relative to the total mass of resin solid contents) of 10% by mass of dibutyltin dilaurate (DBTDL manufactured by Borchers Inc., under the trade name of "LH-10") were added to the mixture, followed by adding ion exchanged water thereto such that the amount of solid content became 40% by mass. Then, a drop of dimethylaminoethanol was further added to the resultant to adjust the pH to 8.0 to 8.5, followed by stirring the resultant at 1000 rpm for 15 minutes using a homodisper to obtain a resin composition.

[Examples 3-2 to 3-7]

Resin compositions were obtained by the same method as that in Example 3-1, except that each blocked polyisocyanate BL-a37 to BL-a42 was formulated such that the molar ratio of isocyanate groups relative to hydroxyl groups (isocyanate groups / hydroxyl groups) became 0.80, potassium acetate was formulated such that the amount thereof, relative to the total mass of the resin solid components, became 0.80% by mass, and 10% by mass of dibutyltin dilaurate was formulated such that the amount thereof, relative to the total mass of the resin solid components, became 0.80% by mass.

[Evaluation 3-1] Storage stability

The viscosity of 20 g of the resultant resin composition at an initial stage, and that of 20 g of the resultant resin composition put into a 20 mL glass bottle, and then stored at 40°C for 10 days were measured using a viscometer manufactured by TOKI SANGYO CO., LTD., under the trade name of RE-85R. The ratio of the viscosity after storage relative to the viscosity at an initial stage was calculated. The case in which the ratio of the viscosity after storage relative to the viscosity at an initial stage was 2.5 or less and neither gelation nor precipitation was confirmed was evaluated as favorable, and the case in which the ratio of the viscosity after storage relative to the viscosity at an initial stage exceeded 1 but was closed to 1, or 1 or less was evaluated as particularly favorable.

[Evaluation 3-2] Curability at low temperature

The resultant resin composition was coated on a polypropylene (PP) plate such that a dried film thickness became 40 μm, and then dried at 90°C for 30 minutes by heating to form a resin film. The resultant resin film was stored at ordinary temperature (23°C) for 1 week to measure the gel fraction. The gel fraction was determined as a percentage (% by mass) by dividing the mass of the undissolved portion when the resin film was immersed in acetone at 23°C for 24 hours by the mass of the resin film before being immersed. The case in which the gel fraction was 80% by mass or more was evaluated as favorable.

Table 14

| | | | Ex. 3-1 | EX. 3-2 | Ex. 3-3 | Ex. 3-4 | Ex. 3-5 | Ex. 3-6 | Ex. 3-7 |
|---|---|---|---|---|---|---|---|---|---|
| Blocked polyisocyanate composition | | | BL-a36 | BL-a37 | BL-a38 | BL-a39 | BL-a40 | BL-a41 | BL-a42 |
| Constitution | Polyisocyanate | | P-1 | P-1 | P-1 | P-1 | P-1 | P-1 | P-1 |
| | Blocking agent | | B-3 | B-3 | B-3 | B-4 | B-4 | B-4 | B-4 |
| | Carboxylate salt | | C | C | C | C | C | C | C |
| | Hydrophilic compound | Kind | MPG -081 | MPG -081 | MPG -081 | MPG -081 | MPG -081 | MPG -081 | MPG -081 |
| | | Amount (% by mol) | 5 | 5 | 5 | 5 | 5 | 3 | 3 |
| | Dispersing agent | Kind | D-1 | D-2 | D-3 | D-1 | D-2 | D-3 | D-3 |
| | | Surface tension (mN/m) | 40.3 | 41.5 | 40.4 | 40.3 | 41.5 | 40.4 | 40.4 |
| | | Amount (Parts by mass) | 1.5 | 1.5 | 1.5 | 1.5 | 1.5 | 1.5 | 0.5 |
| Physical property | Amount of solid content (% by mass) | | 60.0 | 60.2 | 60.1 | 60.2 | 60.3 | 60.2 | 60.2 |

(continued)

| | | Ex. 3-1 | EX. 3-2 | Ex. 3-3 | Ex. 3-4 | Ex. 3-5 | Ex. 3-6 | Ex. 3-7 |
|---|---|---|---|---|---|---|---|---|
| Evaluation | Storage stability (Viscosity ratio) | 1.98 | 2.18 | 2.40 | 1.87 | 1.98 | 1.79 | 1.94 |
| | Curability at low temperature (Gel fraction: % by mass) | 85.7 | 86.1 | 86.5 | 83.7 | 84.3 | 83.4 | 83.1 |
| (Ex.: Example) | | | | | | | | |

INDUSTRIAL APPLICABILITY

The blocked polyisocyanate composition according to the present embodiment makes it possible to provide a resin composition having favorable storage stability. In addition, a resin film having a favorable curability at a low temperature of approximately 80°C can be formed, and therefore the blocked polyisocyanate composition is favorably used to paint a material having a low heat resistance.

## Claims

1. A blocked polyisocyanate composition comprising: a blocked polyisocyanate derived from a polyisocyanate and at least one blocking agent; and an anionic dispersion agent,
wherein the blocking agent comprises:

    a compound (A) of the following general formula (I), or
    a compound (B) having a heterocyclic ring comprising at least one nitrogen atom,
    the anionic dispersion agent has a surface tension of 32 mN/m to 51 mN/m, the surface tension being determined by Wilhelmy method using an aqueous solution consisting of 0.1% by mass, relative to a total mass of the aqueous solution, of the anionic dispersion agent and water at 25°C, and
    the blocked polyisocyanate composition further comprises a carboxylate salt, when the blocking agent comprises the compound (B) having a heterocyclic ring containing at least one nitrogen atom,

    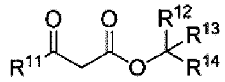
    (I)

    in the general formula (I),

    $R^{11}$ represents a hydroxy group; an alkyl group which may contain at least one substituent selected from the group consisting of a hydroxy group and an amino group; an amino group which may contain at least one substituent selected from the group consisting of a hydroxy group and alkyl groups; an aryl group which may contain at least one substituent selected from the group consisting of a hydroxy group and an amino group; or an alkoxy group which may contain at least one substituent selected from the group consisting of a hydroxy group and an amino group, the amino group may form a ring by binding two of the substituents together, and
    $R^{12}$, $R^{13}$, and $R^{14}$ each independently represents a hydrogen atom; an alkyl group which may contain at least one substituent selected from the group consisting of a hydroxy group and an amino group; or an aryl group which may contain at least one substituent selected from the group consisting of a hydroxy group and an amino group, the amino group may form a ring by binding two of the substituents together, and at least two of $R^{12}$, $R^{13}$, and $R^{14}$ are not hydrogen atoms,
    wherein the anionic dispersion agent is one of or at least two of ammonium polyoxyethylene polycyclic phenyl ether sulfate, sodium polyoxyethylene polycyclic phenyl ether sulfate, ammonium polyoxyethylene alkylether sulfate, and sodium polyoxyethylene alkylether sulfate.

2. The blocked polyisocyanate composition according to claim 1,
wherein the blocking agent comprises the compound (A).

3. The blocked polyisocyanate composition according to claim 1 or 2, wherein a part or all of the blocked polyisocyanate has a structure unit derived from a hydrophilic compound.

4. The blocked polyisocyanate composition according to claim 3, wherein the structure unit derived from a hydrophilic compound comprises at least one hydrophilic group selected from the group consisting of nonionic hydrophilic groups and anionic hydrophilic groups.

5. The blocked polyisocyanate composition according to any one of claims 1 to 4, wherein the blocking agent comprises at least one compound of the general formula (I) in which $R^{11}$ represents an alkoxy group, $R^{12}$ represents a hydrogen group or an alkyl group, and $R^{13}$ and $R^{14}$ represent alkyl groups.

6. The blocked polyisocyanate composition according to any one of claims 1 to 5, wherein an amount of the anionic dispersion agent, relative to 100 parts by mass of the blocked polyisocyanate, is 0.01 parts by mass to 5 parts by mass.

7. The blocked polyisocyanate composition according to any one of claims 1 to 6, wherein the blocked polyisocyanate comprises a blocked isocyanurate trimer.

8. The blocked polyisocyanate composition according to any one of claims 1 to 7, wherein an average number of isocyanate functional groups in the polyisocyanate is at least 2.0.

9. The blocked polyisocyanate composition according to any one of claims 1 to 8, wherein the polyisocyanate is a polyisocyanate derived from at least one diisocyanate selected from the group consisting of aliphatic diisocyanates and alicyclic diisocyanates.

10. The blocked polyisocyanate composition according to claim 1, wherein the blocking agent comprises the compound (B) having a heterocyclic ring comprising at least one nitrogen atom.

11. The blocked polyisocyanate composition according to claim 10, wherein an amount of a counter cation of the carboxylate salt, relative to a total mass of the blocked polyisocyanate, is 0.1% by mass to 20% by mass.

12. The blocked polyisocyanate composition according to claim 10 or 11, wherein the carboxylate salt is a metal carboxylate salt or a carboxylate salt of quaternary ammonium cation.

13. The blocked polyisocyanate composition according to claim 12, wherein the carboxylate salt is the metal carboxylate salt.

14. The blocked polyisocyanate composition according to claim 13, wherein a metal of the metal carboxylate salt is a monovalent metal.

15. The blocked polyisocyanate composition according to any one of claims 10 to 14, wherein the compound having a heterocyclic ring comprising at least one nitrogen atom is a compound having a heterocyclic ring comprising at least two nitrogen atoms.

16. The blocked polyisocyanate composition according to claim 15, wherein the blocking agent is a compound having a heterocyclic ring containing at least three nitrogen atoms.

17. A resin composition comprising: a blocked polyisocyanate composition of any one of claims 1 to 16; and a polyvalent hydroxy compound.

18. The resin composition according to claim 17, wherein a glass transition temperature Tg of the polyvalent hydroxy compound is 0°C to 100°C.

19. The resin composition according to claim 17 or 18, wherein a weight-average molecular weight of the polyvalent hydroxy compound is $5.0\times10^3$ to $2.0\times10^5$.

20. The resin composition according to any one of claims 17 to 19, wherein a hydroxy group value of the polyvalent hydroxy compound is 30 mg KOH/g to 250 mg KOH/g.

**21.** The resin composition according to any one of claims 17 to 20, wherein an amount of the blocked polyisocyanate, relative to 100 parts by mass of the polyvalent hydroxy compound, is 5 parts by mass to 200 parts by mass.

**22.** A resin film formed by curing a resin composition of any one of claims 17 to 21.

**23.** The resin film according to claim 22, wherein a gel fraction of the resin film is 80% by mass or more, the gel fraction being determined by forming the resin film by heating the resin composition at 80°C for 30 minutes to be cured to have a thickness of 40 μm, storing the resin film at 23°C for 1 week, and then immersing the resin film in acetone at 23°C for 24 hours.

**24.** The resin film according to claim 22 or 23, wherein a tensile strength of the resin film is 5 MPa or more, the tensile strength being measured by tensile test conducted at a tensile speed of 20 mm/minute under conditions of 20 mm of distance between chucks, the resin film being formed by heating the resin composition at 80°C for 30 minutes to be cured in a film thickness of 40 μm, a width of 10 mm and a length of 40 mm, wherein the maximum point stress is measured as the maximum stress value to determine the tensile strength.

**25.** A laminated body comprising at least two layers of resin films of any one of claims 22 to 24, constitutions of the resin films being different from each other,
wherein a thickness of each of the layers is 1 μm to 50 μm.

**Patentansprüche**

**1.** Zusammensetzung von blockiertem Polyisocyanat, umfassend: ein blockiertes Polyisocyanat, das von einem Polyisocyanat und mindestens einem Blockiermittel abgeleitet ist; und ein anionisches Dispergiermittel,
wobei das Blockiermittel umfasst:

eine Verbindung (A) mit der folgenden allgemeinen Formel (I), oder
eine Verbindung (B), die einen heterocyclischen Ring mit mindestens einem Stickstoffatom aufweist,
wobei das anionische Dispergiermittel eine Oberflächenspannung von 32 mN/m bis 51 mN/m aufweist, wobei die Oberflächenspannung nach der Wilhelmy-Methode unter Verwendung einer wässrigen Lösung, die aus 0,1 Massen-% in Bezug auf die gesamte Masse der wässrigen Lösung, aus dem anionischen Dispergiermittel und Wasser besteht, bei 25°C bestimmt wird, und
die geblockte Polyisocyanatverbindung weiterhin ein Carboxylatsalz enthält, wenn das Blockiermittel die Verbindung (B), die einen heterocyclischen Ring mit mindestens einem Stickstoffatom aufweist, umfasst,

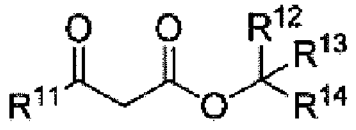

(I)

wobei in der allgemeinen Formel (I),

$R^{11}$ eine Hydroxygruppe; eine Alkylgruppe, die mindestens einen Substituenten, ausgewählt aus der Gruppe bestehend aus einer Hydroxygruppe und einer Aminogruppe, enthalten kann; eine Aminogruppe, die mindestens einen Substituenten, ausgewählt aus der Gruppe bestehend aus einer Hydroxygruppe und Alkylgruppen, enthalten kann; eine Arylgruppe, die mindestens einen Substituenten, ausgewählt aus der Gruppe bestehend aus einer Hydroxygruppe und einer Aminogruppe, enthalten kann; oder eine Alkoxygruppe, die mindestens einen Substituenten, ausgewählt aus der Gruppe bestehend aus einer Hydroxygruppe und einer Aminogruppe enthalten kann, wobei die Aminogruppe durch Verbindung zweier der Substituenten miteinander einen Ring bilden kann, darstellt, und
$R^{12}$, $R^{13}$, und $R^{14}$ jeweils unabhängig voneinander ein Wasserstoffatom; eine Alkylgruppe, die mindestens einen Substituenten, ausgewählt aus der Gruppe bestehend aus einer Hydroxygruppe und einer Aminogruppe, enthalten kann; oder eine Arylgruppe, die mindestens einen Substituenten, ausgewählt aus der Gruppe bestehend aus einer Hydroxygruppe und einer Aminogruppe, enthalten kann, wobei die Aminogruppe durch Verbindung zweier der Substituenten miteinander einen Ring bilden kann, und mindestens zwei von $R^{12}$, $R^{13}$ und $R^{14}$ keine Wasserstoffatome sind, darstellen,

wobei das anionische Dispergiermittel eines oder mindestens zwei von Ammoniumpolyoxyethylen-polycyclisches Phenylethersulfat, Natriumpolyoxyethylen-polycyclisches Phenylethersulfat, Ammoniumpolyoxyethylenalkylethersulfat und Natriumpolyoxyethylenalkylethersulfat ist.

**2.** Zusammensetzung von blockiertem Polyisocyanat nach Anspruch 1, wobei das Blockiermittel die Verbindung (A) umfasst

**3.** Zusammensetzung von blockiertem Polyisocyanat nach Anspruch 1 oder 2, wobei ein Teil oder das gesamte blockierte Polyisocyanat eine Struktureinheit aufweist, die von einer hydrophilen Verbindung abgeleitet ist.

**4.** Zusammensetzung von blockiertem Polyisocyanat nach Anspruch 3, wobei die von einer hydrophilen Verbindung abgeleitete Struktureinheit mindestens eine hydrophile Gruppe umfasst, die aus der Gruppe ausgewählt ist, bestehend aus nicht-ionischen hydrophilen Gruppen und anionischen hydrophilen Gruppen.

**5.** Zusammensetzung von blockiertem Polyisocyanat nach einem der Ansprüche 1 bis 4, wobei das Blockiermittel mindestens eine Verbindung der allgemeinen Formel (I) umfasst, worin $R^{11}$ eine Alkoxygruppe darstellt, $R^{12}$ eine Wasserstoffgruppe oder eine Alkylgruppe darstellt und $R^{13}$ und $R^{14}$ Alkylgruppen darstellen.

**6.** Zusammensetzung von blockiertem Polyisocyanat nach einem der Ansprüche 1 bis 5, wobei die Menge des anionischen Dispergiermittels, bezogen auf 100 Massenteile des blockierten Polyisocyanats, 0,01 Massenteile bis 5 Massenteile beträgt.

**7.** Zusammensetzung von blockiertem Polyisocyanat nach einem der Ansprüche 1 bis 6, wobei das blockierte Polyisocyanat ein blockiertes Isocyanurat-Trimer umfasst.

**8.** Zusammensetzung von blockiertem Polyisocyanat nach einem der Ansprüche 1 bis 7, wobei die durchschnittliche Anzahl von funktionellen Isocyanatgruppen in dem Polyisocyanat mindestens 2,0 ist.

**9.** Zusammensetzung von blockiertem Polyisocyanat nach einem der Ansprüche 1 bis 8, wobei das Polyisocyanat ein Polyisocyanat ist, das von mindestens einem Diisocyanat abgeleitet ist, welches aus der aus aliphatischen Diisocyanaten und alicyclischen Diisocyanaten bestehenden Gruppe ausgewählt ist.

**10.** Zusammensetzung von blockiertem Polyisocyanat nach Anspruch 1, wobei das Blockiermittel die Verbindung (B), die einen heterocyclischen Ring mit mindestens einem Stickstoffatom aufweist, umfasst.

**11.** Zusammensetzung von blockiertem Polyisocyanat nach Anspruch 10, wobei die Menge eines Gegenkations des Carboxylatsalzes, bezogen auf die Gesamtmasse des blockierten Polyisocyanats, 0,1 Massen-% bis 20 Massen-% ist.

**12.** Zusammensetzung von blockiertem Polyisocyanat nach Anspruch 10 oder 11, wobei das Carboxylatsalz ein Metallcarboxylatsalz oder ein Carboxylatsalz eines quaternären Ammoniumkations ist.

**13.** Zusammensetzung von blockiertem Polyisocyanat nach Anspruch 12, wobei das Carboxylatsalz das Metallcarboxylatsalz ist.

**14.** Zusammensetzung von blockiertem Polyisocyanat nach Anspruch 13, wobei ein Metall des Metallcarboxylsalzes ein einwertiges Metall ist.

**15.** Zusammensetzung von blockiertem Polyisocyanat nach einem der Ansprüche 10 bis 14, wobei die Verbindung, die einen heterocyclischen Ring mit mindestens einem Stickstoffatom enthält, eine Verbindung ist, die einen heterocyclischen Ring mit mindestens zwei Stickstoffatomen aufweist.

**16.** Zusammensetzung von blockiertem Polyisocyanat nach Anspruch 15, wobei das Blockiermittel eine Verbindung ist, die einen heterocyclischen Ring mit mindestens drei Stickstoffatomen aufweist.

**17.** Harzzusammensetzung, umfassend: eine Zusammensetzung von blockiertem Polyisocyanat nach einem der Ansprüche 1 bis 16; und eine mehrwertige Hydroxyverbindung.

**18.** Harzzusammensetzung nach Anspruch 17, wobei die Glasübergangstemperatur Tg der mehrwertigen Hydroxyverbindung 0°C bis 100°C beträgt.

**19.** Harzzusammensetzung nach Anspruch 17 oder 18, wobei das gewichtsmittlere Molekulargewicht der mehrwertigen Hydroxyverbindung $5{,}0 \times 10^3$ bis $2{,}0 \times 10^5$ ist.

**20.** Harzzusammensetzung nach einem der Ansprüche 17 bis 19, wobei der Hydroxylwert der mehrwertigen Hydroxyverbindung 30 mg KOH/g bis 250 mg KOH/g ist.

**21.** Harzzusammensetzung nach einem der Ansprüche 17 bis 20, wobei die Menge des blockierten Polyisocyanats, bezogen auf 100 Massenteile der mehrwertigen Hydroxyverbindung, 5 Massenteile bis 200 Massenteile ist.

**22.** Harzfilm/-folie, gebildet durch Härten einer Harzzusammensetzung nach einem der Ansprüche 17 bis 21.

**23.** Harzfilm nach Anspruch 22, wobei der Gelanteil des Harzfilms 80 Massen-% oder mehr beträgt, wobei der Gelanteil durch Bilden des Harzfilms durch Erhitzen der zu härtenden Harzzusammensetzung bei 80°C für 30 Minuten, um eine Dicke von 40 μm zu erhalten, Lagerung des Harzfilms bei 23°C für 1 Woche und anschließendes Eintauchen des Harzfilms in Aceton bei 23°C für 24 Stunden bestimmt wird.

**24.** Harzfilm nach Anspruch 22 oder 23, wobei die Zugfestigkeit des Harzfilms 5 MPa oder mehr beträgt, wobei die Zugfestigkeit durch einen Zugversuch gemessen wird, der bei einer Zuggeschwindigkeit von 20 mm/Minute unter den Bedingungen eines Abstands von 20 mm zwischen den Spannvorrichtungen durchgeführt wird, wobei der Harzfilm durch Erhitzen der Harzzusammensetzung bei 80°C für 30 Minuten gebildet wird, um in einer Filmdicke von 40 μm, einer Breite von 10 mm und einer Länge von 40 mm ausgehärtet zu werden, wobei die maximale Punktbelastung als der maximale Belastungswert gemessen wird, um die Zugfestigkeit zu bestimmen.

**25.** Schichtkörper, welcher mindestens zwei Schichten von Harzfilmen nach einem der Ansprüche 22 bis 24 umfasst, wobei die Zusammensetzungen der Harzfilme voneinander verschieden sind,
wobei die Dicke jeder der Schichten 1 μm bis 50 μm ist.

## Revendications

**1.** Composition de polyisocyanate bloqué comprenant : un polyisocyanate bloqué dérivé d'un polyisocyanate et d'au moins un agent de blocage ; et un agent dispersant anionique,
dans laquelle l'agent de blocage comprend :

un composé (A) de la formule générale (I) suivante, ou
un composé (B) ayant un noyau hétérocyclique comprenant au moins un atome d'azote,
l'agent dispersant anionique a une tension de surface de 32 mN/m à 51 mN/m, la tension de surface étant déterminée par la méthode de Wilhelmy en utilisant une solution aqueuse constituée de 0,1 % en masse, par rapport à une masse totale de la solution aqueuse, de l'agent dispersant anionique et de l'eau à 25 °C, et
la composition de polyisocyanate bloqué comprend en outre un sel de carboxylate, lorsque l'agent de blocage comprend le composé (B) ayant un noyau hétérocyclique contenant au moins un atome d'azote,

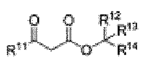

(I)

dans la formule générale (I),

$R^{11}$ représente un groupe hydroxy ; un groupe alkyle qui peut contenir au moins un substituant choisi dans le groupe constitué d'un groupe hydroxy et d'un groupe amino ; un groupe amino qui peut contenir au moins un substituant choisi dans le groupe constitué d'un groupe hydroxy et de groupes alkyles ; un groupe aryle qui peut contenir au moins un substituant choisi dans le groupe constitué d'un groupe hydroxy et d'un groupe amino ; ou un groupe alcoxy qui peut contenir au moins un substituant choisi dans le groupe constitué d'un groupe hydroxy et d'un groupe amino, le groupe amino peut former un noyau en reliant deux des substituants ensemble, et
$R^{12}$, $R^{13}$ et $R^{14}$ chacun indépendamment représente un atome d'hydrogène ; un groupe alkyle qui peut

contenir au moins un substituant choisi dans le groupe constitué d'un groupe hydroxy et d'un groupe amino ; ou un groupe aryle qui peut contenir au moins un substituant choisi dans le groupe constitué d'un groupe hydroxy et d'un groupe amino, le groupe amino peut former un noyau en reliant deux des substituants ensemble, et au moins deux de $R^{12}$, $R^{13}$ et $R^{14}$ ne sont pas des atomes d' hydrogène,
dans laquelle l'agent dispersant anionique est l'un de ou au moins deux du sulfate de phényl éther polycyclique de polyoxyéthylène d'ammonium, du sulfate de phényl éther polycyclique de polyoxyéthylène de sodium, du sulfate d'alkyléther de polyoxyéthylène d'ammonium et du sulfate d'alkyléther de polyoxyéthylène de sodium.

**2.** Composition de polyisocyanate bloqué selon la revendication 1,
dans laquelle l'agent de blocage comprend le composé (A).

**3.** Composition de polyisocyanate bloqué selon la revendication 1 ou 2, dans laquelle une partie ou la totalité du polyisocyanate bloqué a une unité de structure dérivée d'un composé hydrophile.

**4.** Composition de polyisocyanate bloqué selon la revendication 3, dans laquelle l'unité de structure dérivée d'un composé hydrophile comprend au moins un groupe hydrophile choisi dans le groupe constitué de groupes hydrophiles non ioniques et de groupes hydrophiles anioniques.

**5.** Composition de polyisocyanate bloqué selon l'une quelconque des revendications 1 à 4, dans laquelle l'agent de blocage comprend au moins un composé de la formule générale (I) dans laquelle $R^{11}$ représente un groupe alcoxy, $R^{12}$ représente un groupe hydrogéno ou un groupe alkyle, et $R^{13}$ et $R^{14}$ représentent des groupes alkyles.

**6.** Composition de polyisocyanate bloqué selon l'une quelconque des revendications 1 à 5, dans laquelle une quantité de l'agent dispersant anionique, par rapport à 100 parties en masse du polyisocyanate bloqué, est de 0,01 partie en masse à 5 parties en masse.

**7.** Composition de polyisocyanate bloqué selon l'une quelconque des revendications 1 à 6, dans laquelle le polyisocyanate bloqué comprend un trimère d'isocyanurate bloqué.

**8.** Composition de polyisocyanate bloqué selon l'une quelconque des revendications 1 à 7, dans laquelle un nombre moyen de groupes fonctionnels isocyanate dans le polyisocyanate est d'au moins 2,0.

**9.** Composition de polyisocyanate bloqué selon l'une quelconque des revendications 1 à 8, dans laquelle le polyisocyanate est un polyisocyanate dérivé d'au moins un diisocyanate choisi dans le groupe constitué de diisocyanates aliphatiques et de diisocyanates alicycliques.

**10.** Composition de polyisocyanate bloqué selon la revendication 1, dans laquelle l'agent de blocage comprend le composé (B) ayant un noyau hétérocyclique comprenant au moins un atome d'azote.

**11.** Composition de polyisocyanate bloqué selon la revendication 10, dans laquelle une quantité d'un contre-cation du sel de carboxylate, par rapport à une masse totale du polyisocyanate bloqué, est de 0,1 % en masse à 20 % en masse.

**12.** Composition de polyisocyanate bloqué selon la revendication 10 ou 11, dans laquelle le sel de carboxylate est un sel de carboxylate de métal ou un sel de carboxylate de cation d'ammonium quaternaire.

**13.** Composition de polyisocyanate bloqué selon la revendication 12, dans laquelle le sel de carboxylate est le sel de carboxylate de métal.

**14.** Composition de polyisocyanate bloqué selon la revendication 13, dans laquelle un métal du sel de carboxylate de métal est un métal monovalent.

**15.** Composition de polyisocyanate bloqué selon l'une quelconque des revendications 10 à 14, dans laquelle le composé ayant un noyau hétérocyclique comprenant au moins un atome d'azote est un composé ayant un noyau hétérocyclique comprenant au moins deux atomes d'azote.

**16.** Composition de polyisocyanate bloqué selon la revendication 15, dans laquelle l'agent de blocage est un composé ayant un noyau hétérocyclique contenant au moins trois atomes d'azote.

**17.** Composition de résine comprenant : une composition de polyisocyanate bloqué selon l'une quelconque des revendications 1 à 16 ; et un composé hydroxy polyvalent.

**18.** Composition de résine selon la revendication 17, dans laquelle une température de transition vitreuse Tg du composé hydroxy polyvalent est de 0 °C à 100 °C.

**19.** Composition de résine selon la revendication 17 ou 18, dans laquelle un poids moléculaire moyen en poids du composé hydroxy polyvalent est de $5,0 \times 10^3$ à $2,0 \times 10^5$.

**20.** Composition de résine selon l'une quelconque des revendications 17 à 19, dans laquelle une valeur de groupe hydroxy du composé hydroxy polyvalent est de 30 mg KOH/g à 250 mg KOH/g.

**21.** Composition de résine selon l'une quelconque des revendications 17 à 20, dans laquelle une quantité du polyisocyanate bloqué, par rapport à 100 parties en masse du composé hydroxy polyvalent, est de 5 parties en masse à 200 parties en masse.

**22.** Film de résine formé par durcissement d'une composition de résine selon l'une quelconque des revendications 17 à 21.

**23.** Film de résine selon la revendication 22, dans lequel une fraction de gel du film de résine est de 80 % en masse ou plus, la fraction de gel étant déterminée par formage du film de résine par chauffage de la composition de résine à 80 °C pendant 30 minutes pour la durcir de manière à obtenir une épaisseur de 40 µm, stockage du film de résine à 23 °C pendant 1 semaine, et ensuite immersion du film de résine dans de l'acétone à 23 °C pendant 24 heures.

**24.** Film de résine selon la revendication 22 ou 23, dans lequel une résistance à la traction du film de résine est de 5 MPa ou plus, la résistance à la traction étant mesurée par un essai à la traction réalisé à une vitesse de traction de 20 mm/minute dans des conditions de 20 mm de distance entre les mandrins, le film de résine étant formé par chauffage de la composition de résine à 80 °C pendant 30 minutes pour la durcir à une épaisseur de film de 40 µm, une largeur de 10 mm et une longueur de 40 mm, dans lequel la contrainte maximale en un point est mesurée comme étant la valeur de contrainte maximale pour déterminer la résistance à la traction.

**25.** Corps stratifié comprenant au moins deux couches de films de résine selon l'une quelconque des revendications 22 à 24, les constitutions des films de résine étant différentes les unes des autres,
dans lequel une épaisseur de chacune des couches est de 1 µm à 50 µm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002322238 A
- JP 2006335954 A
- WO 2018070532 A2
- US 2019010272 A1
- JP 57034107 A
- JP 61275311 A
- JP 1261409 A
- JP 3006273 A
- JP 508 T